(19) Europäisches Patentamt
European Patent Office
Office européen des brevets

(11) Veröffentlichungsnummer : **0 287 515 B1**

(12) # EUROPÄISCHE PATENTSCHRIFT

(45) Veröffentlichungstag der Patentschrift : **02.05.91 Patentblatt 91/18**

(51) Int. Cl.[5] : **C09B 67/54**, C09B 67/26, // D06L3/12, B01D61/14

(21) Anmeldenummer : **88810228.2**

(22) Anmeldetag : **07.04.88**

(54) **Verfahren zur Herstellung von konzentrierten, wässrigen Farbstoffzubereitungen wasserlöslicher organischer Farbstoffe.**

(30) Priorität : **16.04.87 CH 1507/87**
**07.12.87 CH 4759/87**

(43) Veröffentlichungstag der Anmeldung : **19.10.88 Patentblatt 88/42**

(45) Bekanntmachung des Hinweises auf die Patenterteilung : **02.05.91 Patentblatt 91/18**

(84) Benannte Vertragsstaaten : **BE CH DE ES FR GB IT LI**

(56) Entgegenhaltungen :
**EP-A- 0 184 993**
**EP-A- 0 197 006**
**DE-A- 3 539 727**

(73) Patentinhaber : **CIBA-GEIGY AG**
**Klybeckstrasse 141**
**CH-4002 Basel (CH)**

(72) Erfinder : **Lacroix, Roger, Dr.**
**Rue Vauban 24**
**F-68300 Village-Neuf (FR)**
Erfinder : **Châtelain, Roland**
**Mühleackerstrasse 31/3**
**CH-4402 Frenkendorf (CH)**
Erfinder : **Kvita, Petr, Dr.**
**Tschäpperliring 10**
**CH-4153 Reinach (CH)**

EP 0 287 515 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die vorliegende Erfindung betrifft ein Verfahren zur Herstellung von Farbstoffzubereitungen wasserlöslicher organischer Farbstoffe, die nach dem Verfahren hergestellten Zubereitungen sowie deren Verwendung zum Färben und Bedrucken von natürlichem oder synthetischem Fasermaterial.

Wasserlösliche organische Farbstoffe fallen am Ende der Synthese z.B. in Form verdünnter wässriger Lösungen oder als konzentrierte Suspensionen an, aus denen der Farbstoff in der Regel durch Salzzugabe ausgefällt und dann in Filterpressen abgepresst wird.

Aus den so erhaltenen Presskuchen können durch Zugabe von Wasser Farbstoffsuspensionen oder Farbstofflösungen für die weitere Verarbeitung hergestellt werden.

Notwendige Verarbeitungsmassnahmen mit dem Ziel, verkaufsfertige Farbstoffzubereitungen herzustellen, betreffen beispielsweise die Entfernung von Nebenprodukten und Salzen und die Aufkonzentrierung der rohen Farbstofflösungen oder -suspensionen.

Ein hoher Salzgehalt und organische Nebenprodukte wirken sich vor allem negativ auf die Haltbarkeit von flüssigen Farbstoffzubereitungen aus, indem sie zu Ausfällungen führen. Die organischen Nebenprodukte, die meistens auch eine Eigenfarbe besitzen, können zusätzlich zu einer unerwünschten Verschiebung des Farbtons führen.

Die Anwendung membrangebundener Filtriertechniken zur Herstellung von Zubereitungen wasserlöslicher organischer Farbstoffe ist bereits aus der US-A-4 689 048 bekannt. Das dort beschriebene Verfahren geht von den wässrigen Suspensionen des Rohfarbstoffs aus, die mit Hilfe eines ersten Membrantrennverfahrens weitgehend von in Wasser löslichen Nebenprodukten befreit und deren Salzgehalt auf etwa die Hälfte verringert werden ; dann folgt ein zweites Membrantrennverfahren.

In diesem ersten Membrantrennverfahren permeieren also die löslichen Nebenprodukte und ein Teil der Selze durch die Membran, während der Farbstoff und in Wasser unlösliche Anteile zurückgehalten werden.

In dem zweiten Membrantrennverfahren wird dann die Farbstoffsuspension – gegebenenfalls nach einer Verdünnung mit Wasser – entsalzt und aufkonzentriert und schliesslich in eine verkaufsfertige flüssige oder feste Farbstoffzubereitung übergeführt.

Aus der DE-A-35 39 727 ist schliesslich ein Verfahren zum Reinigen von Farbstofflösungen bekannt, das eine Kombination aus einem üblichen Membrantrennverfahren (z.B. Ultrafiltration oder Umkehrosmose) zusammen mit einer statischen Mikrofiltration (Klärfiltration) verwendet. Eine solche statische Mikrofiltration ist nur für die Reinigung von Flüssigkeiten mit sehr geringen Farbstoffgehalten geeignet, weist aber erhebliche Mängel, wie z.B. Membranverstopfungen und damit verbunden einen Abfall der Durchflussrate, auf.

Aufgabe der vorliegenden Erfindung ist es nun, Verfahren bereitzustellen, um Rohfarbstofflösungen, die relativ hohe Anteile an in Wasser unlöslichen oder in Wasser schwerlöslichen Nebenprodukten in suspendierter oder teilweise auch in kolloidaler Form enthalten, aufzuarbeiten und in verkaufsfertige Farbstoffzubereitungen zu überführen. Dies wird erfindungsgemäss dadurch erreicht, dass man mit Rohfarbstofflösungen – und nicht mit Suspensionen – arbeitet, und diese vor, nach oder gegebenenfalls auch vor und nach einem Membrantrennverfahren einer Querstrom-Mikrofiltration (cross-flow microfiltration) unterwirft, um die genannten unlöslichen bis schwerlöslichen Nebenprodukte abzutrennen. Dadurch vermeidet man z.B. einerseits mögliche Membranverstopfungen und erreicht so hohe Durchflussraten (verkürzte Behandlungszeiten) bei den (nachfolgenden) Membrantrennverfahren und andererseits auch Farbstoffzubereitungen, die frei von störenden unlöslichen Anteilen sind und eine.hervorragende Stabilität aufweisen.

Bei der Querstrom-Mikrofiltration wird die zu filtrierende Lösung (feed solution) kontinuierlich tangential über die Oberfläche der Membran geführt, ähnlich wie bei der Ultra- oder Hyperfiltration (Umkehrosmose). Die Lösung wird ständig in Bewegung gehalten und bei hoher Turbulenz kann so die Bildung von filtrationshemmenden Ablagerungen (Sekundärmembran) und Verstopfungen der Membranporen weitgehend vermieden werden. Durch Rückspülung der Membran entgegengesetzt zur Filtrationsrichtung können in das Porensystem der Membran eingedrungene Partikel wieder entfernt werden.

Gegenstand der vorliegenden Erfindung ist daher ein Verfahren zur Herstellung von konzentrierten wässrigen Farbstoffzubereitungen wasserlöslicher organischer Farbstoffe durch Entsalzung und Aufkonzentrierung entsprechender Rohrfarbstofflösungen mittels eines Membrantrennverfahrens, das dadurch gekennzeichnet ist, dass man vor und/oder nach dem Membrantrennverfahren die Farbstofflösungen zwecks Abtrennung unlöslicher Bestandteile einer Querstrom-Mikrofiltration (nachfolgend Mikrofiltration genannt) unterwirft und in eine flüssige oder feste Handelsform überführt.

Die Mikrofiltration, obwohl ebenfalls ein membrangebundener Verfahrensschritt, soll in der vorliegenden Erfindung als selbständiger Verfahrensschritt betrachtet werden und nicht unter die Definition der anderen "Membrantrennverfahren" fallen.

Weitere Gegenstände der Erfindung betreffen die erfindungsgemäss hergestellten flüssigen oder festen

Farbstoffzubereitungen sowie deren Verwendung zum Färben und Bedrucken von natürlichen oder synthetischen Fasermaterialien.

Als wasserlösliche organische Farbstoffe kommen beispielsweise saure (Colour Index (C.I.) acid and direct dyes) und basische (C.I. basic dyes), wie Metallkomplex-, Chromierungs-, Entwicklungs- und Beizenfarbstoffe sowie vor allem Reaktivfarbstoffe in Frage. Es handelt sich insbesondere um sulfonsäure- bzw. carbonsäuregruppenhaltige metallfreie oder metallhaltige und metallisierbare Mono-, Dis- und Polyazofarb stoffe, Pyrazolon-, Thioxanthron-, Oxazin-, Stilben-, Formazanfarbstoffe, Anthrachinon-, Nitro-, Methin-, Triphenylmethan-, Xanthon-, Naphthazarin-, Styryl-, Azastyryl-, Naphthoperinon-, Chinophthalon- und Phthalocyaninfarbstoffe, sowie vorzugsweise um solche Farbstoffe, die mindestens einen faserreaktiven Rest im Farbstoffmolekül aufweisen.

Bei den gemäss vorliegendem Verfahren in erster Linie zu Farbstoffzubereitungen verarbeiteten wasserlöslichen anionischen Farbstoffen handelt es sich insbesondere um die Alkalimetallsalze oder Ammoniumsalze der sogenannten sauren Wollfarbstoffe, der Reaktivfarbstoffe oder der substantiven Baumwollfarbstoffe der Azo-, Anthrachinon- und Phthalocyaninreihe. Als Azofarbstoffe kommen z.B. metallhaltige oder metallfreie Mono- und Disazofarbstoffe sowie Formazanfarbstoffe, die eine oder mehrere Sulfonsäuregruppen enthalten, in Betracht. Als Anthrachinonfarbstoffe sind insbesondere 1-Amino-4-arylamino-anthrachinon-2-sulfonsäuren und als Phthalocyaninfarbstoffe besonders sulfierte Kupferphthalocyanine oder Phthalocyaninarylamide zu erwähnen.

Als wasserlösliche Metallkomplexfarbstoffe kommen sulfonsäure- bzw. carbonsäuregruppenhaltige Metallkomplexfarbstoffe, beispielsweise 1 : 1-oder 1 : 2-Metallkomplexe von Azo- oder Azomethinfarbstoffen oder metallisierte Phthalocyanine, insbesondere Kupfer- und Nickelphthalocyanine, in Betracht. Bei den 1 : 1- und 1 : 2-Metallkomplexen handelt es sich vorzugsweise um 1 : 1-Nickelkomplexe, 1 : 1-Kobaltkomplexe, 1 : 1-Kupferkomplexe, 1 : 1-Chromkomplexe, 1 : 1-Eisenkomplexe oder um symmetrische oder asymmetrische 1 : 2-Kobaltkomplexe, 1 : 2-Eisenkomplexe oder 1 : 2-Chromkomplexe von insbesondere o-Carboxy-o′-hydroxy-, o-Hydoxy-o′-amino- oder o,o′-Dihydroxyazofarbstoffen des Benzol-azo-benzol-, Naphthalin-azo-naphthalin-, Benzol-azo-naphthalin-, Benzol-azo-pyrazolon-, Benzol-azo-pyridon- oder Benzol-azo-acetessigsäureamid-Typs, wobei diese Gruppierungen unsubstituiert oder auch substituiert sein können. Als Substituenten kommen z.B. in Betracht : gegebenenfalls substituierte Sulfonsäureamide oder Sulfone, Halogen oder Nitro.

Die Kupfer- und Nickelphthalocyanine leiten sich von den üblichen Gemischen verschiedener Sulfonierungsgrade ab und enthalten vorzugsweise 2 bis 3 oder auch 4 sulfatierte Sulfonsäure-β- oder -γ-hydroxy-alkylamidgruppen, können daneben aber auch einzelne Halogene und einzelne Sulfonsäureamidgruppen enthalten, wobei diese Sulfonsäureamidgruppen am Stickstoff unsubstituiert oder substituiert sein können, beispielsweise durch nieder Alkyl, wie Methyl, Ethyl, Propyl, Butyl, oder niedere Hydroxyalkylgruppen, wie 2-Hydroxyethyl, 2-Hydroxypropyl, 3-Hydroxypropyl.

Beim vorliegenden Verfahren verwendet man die sulfonsäuregruppenhaltigen Azofarbstoffe vorteilhaft in Form ihrer Metallsalze, z.B. der Kalium- oder vor allem Natriumsalze.

Als geeignete faserreaktive Gruppen enthalten die Reaktivfarbstoffe z.B. heterocyclische Gruppen oder eine Acylgruppe von einer Carbonsäure, wobei diese Gruppen mindestens ein unter Färbebedingungen abspaltbares Halogenatom aufweisen. Es handelt sich beispielsweise um die folgenden Gruppen : s-Triazinylreste, die am Triazinring ein oder zwei Halogenatome, wie Chlor-, Fluor- oder Bromatome tragen, Pyrimidylreste, die ein bis drei Halogenatome wie Chlor- und/oder Fluoratome bzw. eine oder zwei Arylsulfonyl- oder Alkansulfonylgruppen am Pyrimidinring tragen, Dichlorchinoxylinyl- oder 2-Chlorbenzthiazolylgruppen oder die Acylreste halogenhaltiger aliphatischer Carbonsäuren oder ungesättigter Carbonsäuren, wie der Chloracetylrest oder der Acylrest der Acrylsäure, oder die Reste der β-Brompropionsäure und der α,β-Dibrompropionsäure.

Beispiele für Faserreaktivgruppen der Vinylsulfon-Reihe sind neben der Vinylsulfonylgruppe selbst aliphatische Sulfongruppen, die in β-Stellung zur Sulfongruppe eine alkalisch eliminierbare Gruppe, wie ein Halogenatom oder einen Esterrest einer Säure, enthalten, wie beispielsweise die β-Chloräthylsulfonyl-, β-Acetoxyäthylsulfonyl-, β-(3-Sulfobenzoyloxy)-äthylsulfonyl-, β-Sulfatoäthylsulfonyl-, β-Thiosulfatoäthylsulfonyl-, β-Phosphatoäthylsulfonyl-, β-Sulfatoäthylsulfonylmethylamino-, Vinylsulfonylmethylamino-, 4-Vinylsulfonylbutyryl-, 4-Chloräthylsulfonylbutyryl-, Vinylsulfonyläthoxyäthylamino- oder die 4-β-Sulfatoäthylsulfonylanilino-Gruppe.

Desweiteren kommen als faserreaktive Gruppen z.B. noch in Frage : Halogencyclobutan-, Mono- oder Bis-(γ-halogen-β-hydroxypropyl)-aminogruppen, β-Halogenäthylsulfamidreste, β-Halogenäthoxygruppen, β-Halogenäthylmercaptogruppen, γ-Halogen-β-hydroxy-propylsulfamidreste oder 2,3-Epoxypropylgruppen.

Die Reaktivreste können eine der genannten faserreaktiven Gruppen oder auch mehrere dieser Gruppen enthalten, z.B. drei oder vier. Die faserreaktiven Gruppen können untereinander gleich oder auch verschieden sein.

Bei den wasserlöslichen basischen Farbstoffen handelt es sich um die gebräuchlichen Salze und Metallhalogenid-, beispielsweise Zinkchlorid-Doppelsalze der bekannten kationischen Farbstoffe, insbesondere der Methin-, bzw. Azamethinfarbstoffe, die z.B. einen Indolinium-, Pyrazolium-, Imidazolium-, Triazolium-, Tetrazolium-, Oxadiazolium-, Thiodiazolium-, Oxazolium-, Thiazolium-, Pyridinium-, Pyrimidinium-, Pyrazinium-Ring enthalten.

Die genannten Heterocyclen können gegebenenfalls substituiert und/oder durch aromatische Ringe anelliert sein. Ferner kommen auch kationische Farbstoffe der Diphenylmethan-, Triphenylmethan-, Oxazin-, Thiazin- und 1,2-Pyran-Reihe in Frage, sowie schliesslich auch Farbsalze der Arylazo- und Anthrachinonreihe.

Die Farbstoffe können gegebenenfalls auch in Mischungen miteinander oder gegebenenfalls mit Farbstoffen eines anderen Typs vorliegen.

Unter dem Begriff wasserlösliche organische Farbstoffe sollen im vorliegenden auch wasserlösliche optische Aufheller verstanden werden und zwar in erster Linie Stilbenaufheller, vor allem solche vom Typ der Bistriazinylaminostilben-disulfonsäure, der Bis-styrylbiphenyle und -benzole und der Bis-triazolylstilben-disulfonsäuren. Dabei liegen die sulfogruppenhaltigen Aufheller vorzugsweise in Form ihrer Metall-salze vor, wie sie bei der Synthese anfallen, z.B. Lithium-, Kalium-, Magnesium- oder vor allem Natriumsalze sowie Ammonium-, Amin- oder Alkanolaminsalze.

Bevorzugt werden mit Hilfe des erfindungsgemässen Verfahrens sulfogruppenhaltige Stilbenaufheller der folgenden Formel zu festen oder flüssigen Handelsformen verarbeitet:

(1) 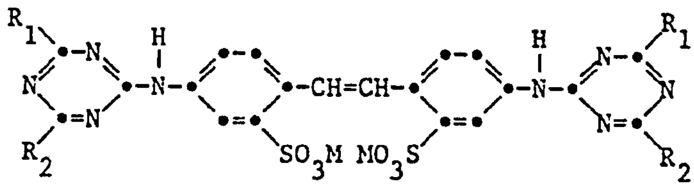

worin M Wasserstoff, ein Alkalimetall-, Erdalkalimetall-, Ammonium- oder Aminsalzkation, $R_1$ und $R_2$ unabhängig voneinander $-NH_2$, $-NHCH_3$, $-NHC_2H_5$, $-N(CH_3)_2$, $-N(C_2H_5)_2$, $-NHCH_2CH_2OH$, $-NHCH_2CH_2CH_2OH$, $-N(CH_2CH_2OH)_2$, $-N(CH_2CH_2CH_2OH)_2$, $-N(CH_3)(CH_2CH_2OH)$, $-NHCH_2CH_2OCH_2CH_2OH$, $-NHCH_2CH_2CH_2SO_3M$, $-OH$, $-OCH_3$, $-OCH(CH_3)_2$, $-OCH_2CH_2OCH_3$,

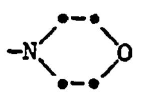 , $-SCH_3$ , 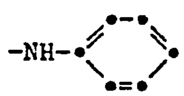 , $-N(CH_2CH(OH)-CH_3)_2$ , 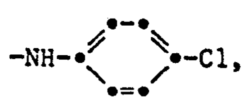 ,

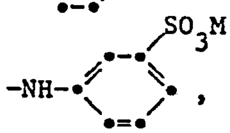 , 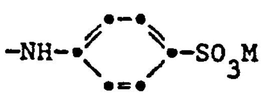 , 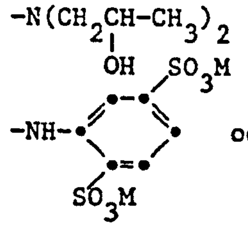 oder 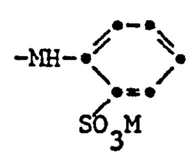

bedeuten, worin M Wasserstoff, ein Alkalimetall-, Erdalkalimetall-, Ammonium- oder Aminsalzkation bedeutet; oder der Formel

(2) 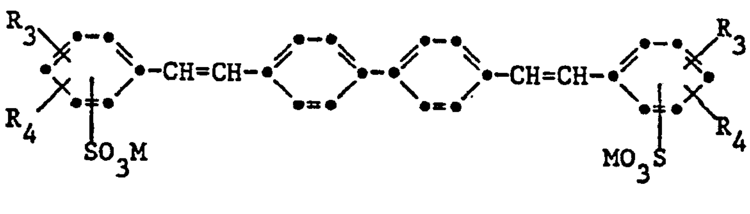 ,

worin $R_3$ Wasserstoff, Alkyl mit 1 bis 4 Kohlenstoffatomen, Alkoxy mit 1 bis 4 Kohlenstoffatomen, Halogen, oder $SO_3M$, $R_4$ Wasserstoff oder Alkyl mit 1 bis 4 Kohlenstoffatomen und M Wasserstoff, ein Alkalimetall-, Erdalkalimetall-, Ammonium- oder Aminsalzkation bedeutet; ferner der Formel

(3) 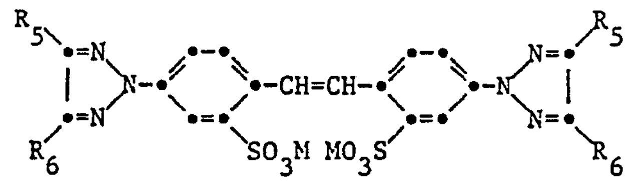 ,

worin M Wasserstoff, ein Alkalimetall-, Erdalkalimetall-, Ammonium-oder Aminsalzkation und $R_5$ und $R_6$ unabhängig voneinander Wasserstoff,

$-CH_3$, 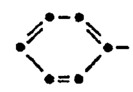 , 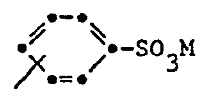 ,

oder $R_5$ und $R_6$ zusammen die
Ergänzung zu einem Benzolring bedeuten.

Diese Farbstoffe bzw. optischen Aufheller werden nach bekannten kontinuierlich oder diskontinuierlich arbeitenden Verfahren hergestellt und fallen am Ende der Synthese, je nach Verfahrensführung und Löslichkeitseigenschaften, in Form einer Syntheselösung oder Synthesesuspension an.

Für das erfindungsgemässe Verfahren werden nur Farbstofflösungen eingesetzt. Liegen nach der Beendigung der Synthese Farbstoffsuspensionen vor, so müssen diese entsprechend verdünnt werden.

Als Membrantrennverfahren sind für das erfindungsgemässe Verfahren z.B.

- die Dialyse über ein Konzentrationsgefälle an ionen-selektiven Membranen, oder
- die Elektrodialyse durch Anlegen einer elektrischen Spannung und unter Anwendung von Ionenaustauschermembranen als Diaphragma, und insbesdondere
- die Ultrafiltration und
- die Umkehrosmose geeignet.

Ultrafiltration und Umkehrosmose werden in der Regel mit feinporigen Membranen mit Porendurchmessern von etwa 0,1 bis 1000 nm durchgeführt. Die Porendurchmesser für Umkehrosmose (Hyperfiltration)-Membranen liegen im unteren Teil dieses Bereichs, also im wesentlichen im Bereich von 0,1 bis 50 nm, vorzugsweise im Bereich von 0,1 bis 10 nm.

Die Ultrafiltration kann sowohl unter Druck, als auch durch Anlegen eines Vakuums betrieben werden. Ferner kann auf seiten der Farbstofflösung unter Druck gearbeitet und permeatseitig gleichzeitig ein Vakuum angelegt werden. Gearbeitet wird allgemein mit einem Druck von 0,5 bis 10 bar oder einem Vakuum von 200 bis 20 mbar. Vorteilhaft führt man die Ultrafiltration durch Anlegen eines Vakuums durch, da ein Unterdruck permeatseitig einer Verstopfung der Membran entgegenwirkt und den Membranflux deutlich steigert.

Bei der Hyperfiltration handelt es sich um eine Molekulartrennmethode, die unter Verwendung semipermeabler Membranen mit einem Trennschnitt im Molekulargewichtsbereich von z.B. 300 bis 1.000, vorzugsweise 400 bis 800, durchgeführt wird. Derartige Membranen lassen Wasser und aufgelöste Stoffe, die aufgrund ihres Molekulargewichts unterhalb der Trenngrenze liegen, bei geringem bis mittlerem Druck durchtreten. Allgemein werden Druck von 10 bis 100 bar und vorzugsweise 10 bis 40 bar verwendet.

Die im erfindungsgemässen Verfahren aufgrund ihrer guten Trenneigenschaften bevorzugt verwendeten Membranen bestehen aus polymeren organischen Materialien, die gegebenenfalls durch saure oder basische Gruppen, z.B. an ihren Oberflächen, chemisch modifiziert, z.B. sulfoniert, sein können.

Bei dem polymeren Membranmaterial handelt es sich vorzugsweise um natürliche, halbsynthetische oder synthetische Materialien, die reaktionsfähige Gruppen, wie beispielsweise Hydroxy-, Amino- und/oder Amidoximgruppen enthalten. Derartige Materialien können – sofern sie chemisch modifiziert werden sollen – mit geeigneten Verbindungen umgesetzt werden, die einerseits saure oder basische Gruppen und andererseits mindestens eine unter Bildung einer chemischen (kovalenten) Bindung reaktionsfähige Gruppierung enthalten.

Bei den sauren Gruppen handelt es sich in erster Linie um Carboxyl-und Sulfongruppen und bei den basischen Gruppen um primäre, sekundäre oder tertiäre Aminogruppen, ferner Phsophonium- oder Sulfoniumgruppen.

Beispielsweise können die folgenden Polymere zur Herstellung von Membranen verwendet werden :

- Celluloseacetate, z.B. solche mit niedrigem Acetylgruppengehalt, aber auch höher acylierte Cellulose, z.B. sogenanntes Zweieinhalbacetat, oder
- Polyvinylalkohole,
- Polyacrylnitril und Copolymere aus Acrylnitril und anderen ethylenisch ungesättigten Monomeren,

- Polysulfone,
- Polystyrole,
- Polyamide oder
- Polyimide.

Geeignete Gemische dieser Polymeren sind ebenfalls geeignet.

Vorzugsweise verwendet man solche Polymeren, die vor oder nach oder in kombinierter Weise teilweise vor und teilweise nach der Membranbildung wie angegeben chemisch modifiziert wurden.

Als reaktive Verbindungen, die eine saure oder basische Gruppe enthalten, kommen farblose und farbige Verbindungen in Betracht, vor allem saure Reaktivfarbstoffe, die verschiedenen Klassen angehören können, wie Anthachinon-, Azo- und Formazanfarbstoffe. Sie können gegebenenfalls auch als Metallkomplexe vorliegen.

Besonders geeignet sind semipermeable Membranen mit Porendurchmessern von 0,1 bis 50 nm und einem Trennschnitt in Molekulargewichtsbereich von 300 bis 1000, vorzugsweise von 400 bis 800. Es handelt sich hierbei im wesentlichen um übliche,anionisch modifizierte Celluloseacetat-, Polyacrylnitril-, Polystyrol-, Polyvinylalkohol- und insbesondere Polysulfonmembranen (US-A-4,247,401, US-A-4,604,204, US-A-4,584,103, US-A-4,477,634, US-A-4 690 765, US-A-4 690 766, EP-A-47 953, EP-A-82 355).

Für die Mikrofiltration, die erfindungsgemäss vor und/oder nach dem Membrantrennverfahren eingesetzt wird und die dazu dient ungelöste (suspendierte oder kolloidale) Teile aus den Farbstofflösungen zu entfernen, werden üblicherweise mikroporöse Membranen mit Porendurchmessern von 0,05, insbesondere 0,1 bis 40 µm, vorzugsweise von 0,2 bis 10 µm verwendet.

Die Mikrofiltration kann bei einem Arbeitsdruck von 0,5 bis 10 bar, vorzugsweise 0,5 bis 5 bar durchgeführt werden.

Die während der Mikrofiltration sich gegebenenfalls auf der Membran ablagernden Feststoffteilchen können durch einen Rückspülvorgang von der Membranoberfläche abgespült werden. Auf der Filtratseite der Membran wird dazu kurzzeitig ein höherer Druck angelegt als er auf der Retentatseite vorliegt. Das Filtrat kann so durch die Poren strömen und die Retentatseite von Ablagerungen freispülen.

Als Membranen für die Mikrofiltration kommen sowohl solche aus organischem als auch aus anorganischem Material in Frage.

Organische Membranmaterialien sind z.B. organische Polymere, insbesondere gegebenenfalls chemisch oder physikalisch modifizierte Polyethylene, Polypropylene, Polytetrafluorethylene, Celluloseacetate, Polyacrylnitrile, Polyvinylalkohole, Polystyrole, Polysulfone, Polyimide oder Polyamide.

Anorganische Membranen sind z.B. solche aus porösem Metall bzw. Metalllegierungen (sog. Metallsintermembranen, z.B. aus porösem Stahl) oder solche aus porösem Kohlenstoff, dessen Oberfläche z.B. mit einer dünnen Schicht aus Zirkonoxid, Silizium- oder Aluminiumoxid beschichtet sein kann oder aus porösem Glas oder Keramik, wobei die Keramikmembranen z.B. mit Aluminiumoxid bescheichtet sein können ; ferner auch Aluminiumoxidmembranen, gegebenenfalls beschichtet mit Zirkonoxid. Organische wie anorganische Membranen werden zweckmässigerweise in Rohrform verwendet, wobei die Röhren in einem Rohrmembranmodul zusammengefasst werden. Bevorzugt zum Einsatz gelangen beispielsweise die folgenden Membranen (die eingeklemmerten Zahlen (Molekulargewichte) geben den Trennschnitt oder cut-off level an) : Polyacrylmitrilmembran (~100.000), Celluloseacetatmembran (~5000 oder ~20.000), Polysulfonmembran (~10.000), mit Zirkonoxid beschichtete Kohlenstoffmembran (~20.000, ~40.000 oder ~50.000).

Die Membranen können natürlich je nach Membrantrennvorrichtung nicht nur in Form von Rohren vorliegen, sondern auch als Platten, Schläuche oder Hohlfasern ausgebildet sein.

Die erfindungsgemäss eingesetzten Farbstofflösungen haben in der Regel einen Farbstoffgehalt von 5 bis 20 Gew.-% und einen Salzgehalt (anorganische Salze) von 1 bis 20 Gew.-%, insbesondere 1 bis 10 Gew.-%. Der pH-Wert liegt in der Regel im Bereich von 3 bis 10, vorzugsweise 3 bis 9. Unlösliche Anteile werden durch Mikrofiltration abgetrennt, die Aufkonzentrierung und Entsalzung wird so lange durchgeführt, bis ein Farbstoffgehalt von 10 bis 50 Gew.-% erreicht ist. Der Salzgehalt sinkt dabei unter 5 Gew.-%, z.B. 0,05 bis 5 Gew.-%, und vorzugsweise unter 1 Gew.-%, z.B. 0,05 bis 1 Gew.-%.

Die Farbstofflösungen, die erfindungsgemäss eingesetzt werden, können Temperaturen im Bereich von 10 bis 80°C, vorzugsweise 20 bis 60°C aufweisen.

Die so erhaltenen konzentrierten Farbstoffzubereitungen, die sich durch ihre hohe Konzentration an Farbstoff, ihre Homogenität und ihre gute Stabilität (über mehrere Monate) in einem weiten Temperaturbereich (0°C bis 50°C) auszeichnen, können dann in flüssige oder feste Handelsformen übergeführt werden.

Zur Herstellung der erfindungsgemässen konzentrierten Farbstoff- bzw. Aufhellerzubereitungen ist es vorteilhaft Farbstoff- bzw. Aufhellersalze mit einer guten Wasserlöslichkeit einzusetzen, denn nur so lässt sich der Wasseranteil in den Präparaten möglichst gering halten. Daneben ist aber auch bei der Herstellung fester Präparate eine hohe Wasserlöslichkeit des Farbstoffs oder Aufhellers von Vorteil, denn diese ermöglicht eine schonende und energiesparende Trocknung, da hochkonzentrierte Ausgangslösungen eingesetzt werden können.

Das erfindungsgemässe Verfahren umfasst in seiner bevorzugten Ausgestaltung drei membrangebundene Trennoperationen und gliedert sich in die folgenden Einzelschritte :

– Querstrom-Mikrofiltration der wässrigen Lösung der Rohfarbstoffs, zur Abtrennung von ungelösten Anteilen.

– Ultrafiltration/Hyperfiltration der Farbstofflösung, wodurch die Lösung entsalzt auf Werte unter 1 Gew.-% und die Farbstoffkonzentration auf 15 bis 45 Gew.-% erhöht wird.

– Querstrom-Mikrofiltration der konzentrierten Farbstofflösung zur Entfernung unlöslicher Anteile.

– Anschliessende Herstellung der handelsfertigen flüssigen oder festen Farbstoffformulierung.

Die erhaltenen Farbstofflösungen können direkt anschliessend an die Farbstoffsynthese oder auch unabhängig von dieser dem erfindungsgemässen Membrantrennverfahren zugeführt werden.

Zur Herstellung einer handelsfertigen Flüssigform ist die konzentrierte wässrige Farbstoffzubereitung gegebenenfalls nach Zugabe von den für Flüssigformulierungen üblichen Komponenten, wie Lösungsvermittlern, schaumdämpfenden Mitteln, Gefrierschutzmitteln, Feuchthaltemitteln, Tensiden, Puffersubstanzen und/oder Antimokrobika und Einstellen des pH-Wertes, nur noch durch Verdünnen und/oder mit Hilfe von Coupagemitteln auf einen vorgegebenen Endfarbstoffgehalt zu bringen. Die Farbstoffzubereitung kann aber auch, gegebenenfalls nach Zugabe von Zusätzen, wie Bindemitteln, Entstäubungsmitteln, Netzmitteln, Puffersubstanzen, wie Alkalipolyphosphaten, Dinatriumhydrogenphosphat, Zitronensäure und/oder Ethylendiamintetraessigsäure, und/oder Coupagemitteln, durch Wasserentzug, in ein festes Farbstoffpräparat übergeführt werden. Dank der erhöhten Farbstoffkonzentration benötigt man weniger Energie zum Trocknen. Man verwendet übliche Trocknungsverfahren, insbesondere die Sprühtrocknung.

Der pH-Wert der handelsfertigen Flüssigformulierung der Reaktivfarbstoffe wird in der Regel durch Zugabe von Puffersubstanzen eingestellt. Je nach den in den Farbstoffen vorhandenen Reaktivgruppierungen variiert der pH-Wert in den angegebenen Grenzen von 3 bis 9, wobei für die einzelnen Farbstoffgruppen etwa die folgenden Bereiche gelten (es werden nur die Reaktivgruppierungen angegeben) : Chlor- oder Fluortriazinyl (monoreaktiv) - pH-Werte von 7,0 bis 8,5, vorzugsweise 8,0 ; Fluortriazinyl und Vinylsulfonyl (oder Vorstufen wie Sulfato- oder Halogenethylsulfonyl) (bireaktiv) - pH-Werte von 6,5 bis 8,5, vorzugsweise 7,0 ; Chlortriazinyl und Vinylsulfonyl (oder Vorstufen wie Sulfato- oder Halogenethylsulfonyl) - pH-Werte von 5,0 bis 6,5, vorzugsweise 6,0 ; Vinylsulfonyl (oder Vorstufen wie Sulfato- oder Halogenethylsulfonyl) (mono-, bi-, polyreaktiv) - pH-Werte von 2,5 bis 5,5, vorzugsweise 3,5 bis 4,5 und insbesondere 4,5.

Die genannten Hilfs- oder Zusatzmittel können der Farbstofflösung natürlich nicht nur vor deren endgültiger Formulierung als Handelsform zugesetzt, sondern bereits vor oder während des erfindungsgemässen Verfahrens in die Lösung des Rohfarbstoffs eingebracht werden und sind damit wenigstens teilweise bereits in der Farbstofflösung, aus der die endgültige handelsfertige Farbstoffformulierung hergestellt wird, vorhanden (z.B. Lösungsvermittler, Lösungsmittel, Tenside etc.). Eine Zugabe während des Verfahrens ist selbstverständlich nur dann sinnvoll, wenn das oder die Hilfs- oder Zusatzmittel nicht durch eines der Membrantrennverfahren wieder vollständig aus der Lösung entfernt werden.

Verwendung finden die Farbstoffzubereitungen (in ihrer Handelsform) zur Herstellung von Färbebädern, Klotzflotten oder Druckpasten, die sich je nach Farbstoff zum Färben und Bedrucken von natürlichen, wie auch synthetischen Fasermaterialien eignen, wie z.B. von Textilfasermaterialien aus Baumwolle, Wolle, Seide, Polyacrylnitril oder Polyamid oder auch von solchen Materialien aus Fasermischungen, wie z.B. aus Wolle/Polyamid, ferner auch von Papier oder Leder ; die Aufhellerzubereitungen werden z.B. zum optischen Aufhellen von Textilmaterialien, Leder oder Papier verwendet.

Die folgenden Beispiele dienen der Erläuterung der Erfindung ; Teile bedeuten Gewichtsteile und Prozente Gewichtsprozente, sofern nichts anderes angegeben ist. Der Membranflux ist angegeben in Liter Permeat pro $m^2$ Membranfläche und Tag ($1/m^2 \cdot d$).

Beispiel 1

30 kg einer Rohfarbstofflösung des Farbstoffes der Formel

(101) 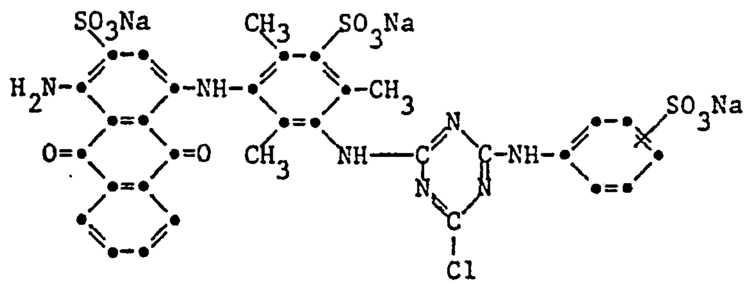

mit einem Trockensubstanzgehalt von 10 Gew.-%, davon 1,5 Gew.-% Salz und einem Anteil unlöslicher Feststoffe von etwa 0,2 Gew.-% werden über Membranmodule, bestückt mit röhrenförmigen Polypropylenmembranen, mikrofiltriert (cross-flow microfiltration). Die Länge der Membranen beträgt 0,5 m, der Innendurchmesser etwa 5,5 mm. Die Mikrofiltration wird bei 40°C (Lösungstemperatur) durchgeführt ; sie wird im Kreislauf geführt, der Eintrittsdruck beträgt 2 bar, der Austrittsdruck 1,6 bar, die Gesamtmembranfläche 0,05 $m^2$ und der Retentatvolumenstrom ungefähr 2 $m^3/h$.

Die Mikrofiltration wird nach vier Stunden beendet. Man erhält etwa 25 kg einer Farbstofflösung, die frei von ungelösten Anteilen (Feststoffen) ist.

Diese Farbstofflösung wird durch ein Umkehrosmoseverfahren entsalzt und aufkonzentriert. Die Umklehrosmose wird bei einem pH-Wert der Lösung von 6,5 bis 7,5, 20°C und einem Druck von 25 bar in zwei Stufen durchgeführt. Es wird eine Polysulfonmembran (hergestellt gemäss Beispiel 1 der US-A-4 690 765) verwendet, deren Trenn(Ausschluss)-grenze (cut-off-level) bei etwa 500 liegt. Die verwendete Umkehrosmoseanlage hat eine Gesamtmembranfläche von 0,81 $m^2$ :

Entsalzung (Stufe 1)

Nach der Zugabe von 30 l Wasser und anschliessender Entfernung von 35 l Permeat (mittlere Durchflussmenge ca. 20 l/Std.), erhält man eine Farbstofflösung mit einem Inertsalzgehalt von 0,5 Gew.-%.

Aufkonzentrierung (Stufe 2)

Nach der Entsalzung werden noch 17 l Permeat (mittlere Durchflussmenge ca. 10 l/Std.) entfernt. Man erhält 8 kg einer konzentrierten Farbstofflösung mit 30 Gew.-% Trockengehalt, deren Natriumchloridgehalt geringer als 0,1% ist.

Während der Aufkonzentrierung konnte eine um 35% (Volumenprozent) höhere Permeatfluxleistung im Vergleich zu Farbstofflösungen, die keiner Klärfiltration (cross-flow microfiltration) unterzogen wurden, erzielt werden.

Aus der nach der Aufkonzentrierung erhaltenen Farbstofflösung kann man durch Zugabe von üblichen Hilfsmitteln, wie z.B. Puffersubstanzen, Lösungsvermittler, Bioziden, Antischaummitteln usw. lagerstabile, wässrige Farbstoffzubereitungen herstellen, die direkt der färberischen Verwendung (Herstellung von z.B. Färbeflotten) zugeführt werden können. Die pH-Werte dieser Farbstoffzubereitungen liegen im Bereich von etwa 6,5 bis 8,5. Sie sind im Temperaturbereich von −10 bis 40°C während mindestens 9 Monaten stabil.

In analoger Weise kann man aus den Rohfarbstofflösungen der monoreaktiven Farbstoffe der folgenden Formeln lagerstabile, konzentrierte Farbstoffzubereitungen herstellen :

(102)

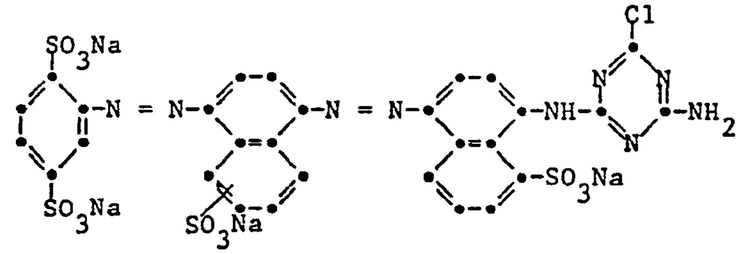

(103)

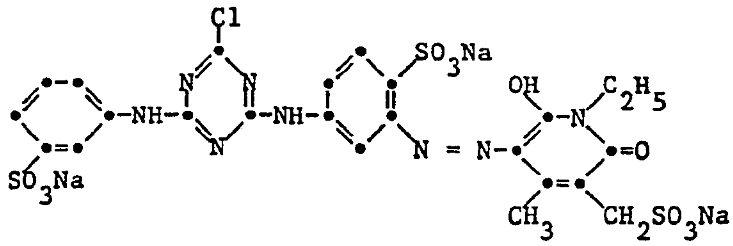

(104)

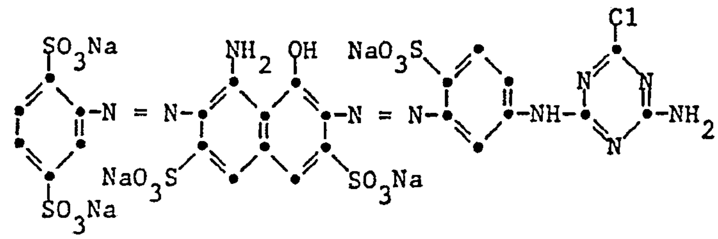

(105)

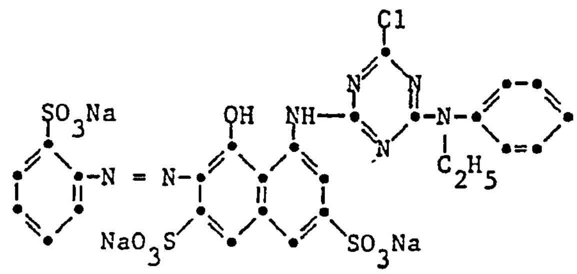

(106)

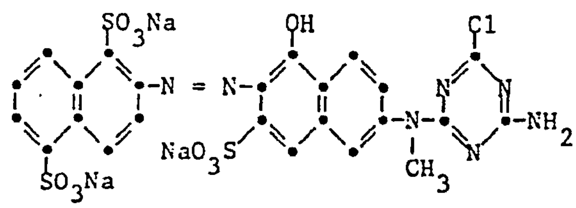

(107)

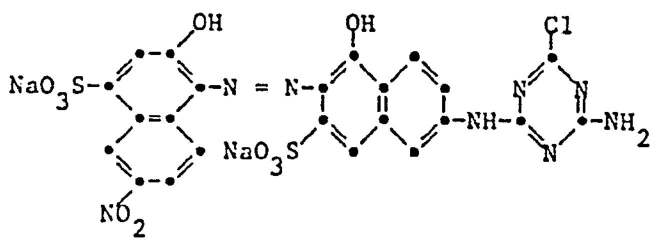

Mischung Cr/Co
Komplex 1:2

(108)

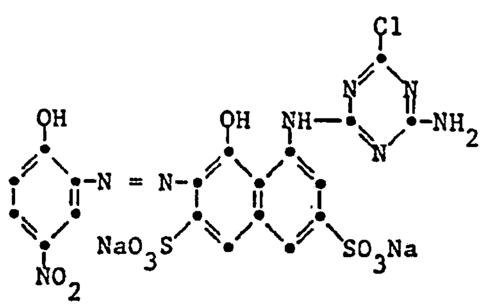

Cr
Komplex 1:2

(109)

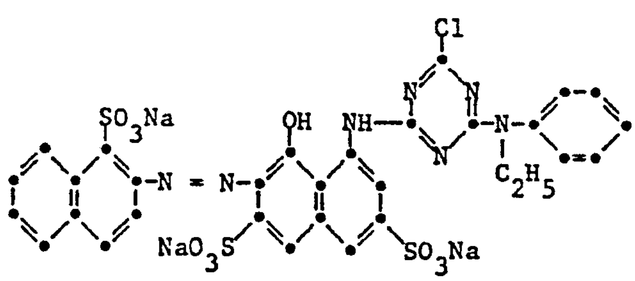

(110) 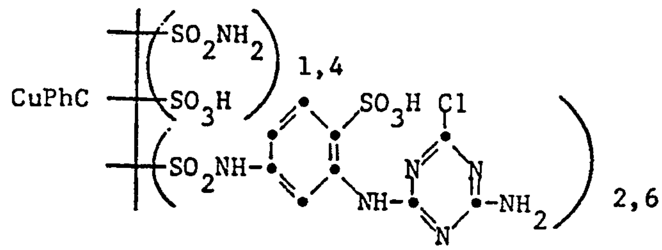

(CuPhC = Kupfer-phthalocyaninrest).

Beispiel 2

8,6 l einer 25 gew.-%igen wässrigen Lösung des Farbstoffs der Formel

(111) 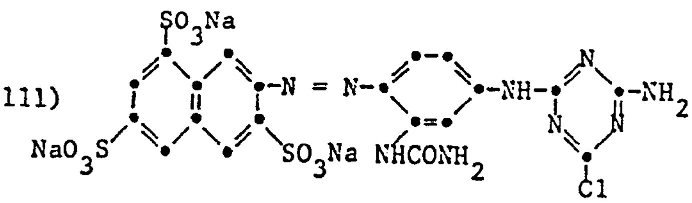

und einem Feststoffanteil von etwa 0,2% werden über ein Membranmodul, bestückt mit röhrenförmigen Polypropylenmembranen mikrofiltriert. Die Farbstofflösung wird durch Entsalzung und Aufkonzentrierung einer entsprechenden Rohrfarbstofflösung durch ein Umkehrosmoseverfahren wie in Beispiel 1 beschrieben erhalten. Der Innendurchmesser der Membranröhren für die Mikrofiltration (cross-flow microfiltration) beträgt etwa 5,5 mm, die Länge 0,5 m und die Gesamtmembranfläche etwa 0,05 $m^2$.

Die Farbstofflösung wird so lange (1 Stunde) mikrofiltriert, bis sie frei von Feststoffen ist. Sie wird dazu im Kreis geführt, die Temperatur der Lösung beträgt 45°C, der Eintrittsdruck 2,5 bar, der Austrittsdruck 1,4 bar.

Es werden 8,4 l konzentrierte, stabile Farbstofflösung erhalten, die frei von Feststoffen ist. Wie in Beispiel 1 beschrieben kann man daraus durch Zugabe üblicher Hilfsmittel lagerstabile, handelsfähige Farbstoffzubereitungen herstellen.

Beispiel 3

1 kg Presskuchen des Farbstoffes der Formel

(112) 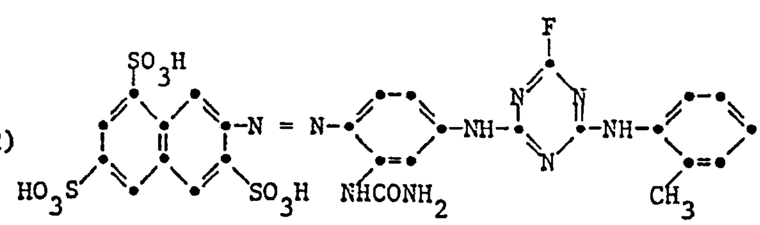

werden in 4,5 l deionisiertem Wasser gelöst. Man erhält eine trübe Farbstofflösung, die bei einem Ueberdruck von 0,8 bar über eine Membran aus mit Zirkonoxid beschichtetem porösem Kohlenstoff (cut-off-level ≥ 50'000) mikrofiltriert. Das klare Filtrat (4,0 l) wird anschliessend durch ein zweistufiges Umkehrosmoseverfahren wie in Beispiel 1 beschrieben entsalzt und aufkonzentriert. Der Zeitaufwand für dieses Umkehrosmoseverfahren ist um 40% geringer im Vergleich zur Durchführung dieses Verfahrens mit einer nicht mikrofiltrierten Farbstoflösung.

Man erhält 2,3 kg einer konzentrierten Farbstofflösung mit 19,6% Trockengehalt, deren Natriumchloridgehalt geringer als 0,3% ist.

Aus dieser konzentrierten Farbstofflösung kann man durch Zugabe üblicher Hilfsmittel und nach anschliessender Mikrofiltration lagerstabile, handelsfähige Farbstoffzubereitungen herstellen, die zum direkten Verbrauch geeignet sind. Der pH-Wert der Farbstoffzubereitungen liegt in der Regel im Bereich von 7,0 bis 8,5.

In analoger Weise kann man auch aus Presskuchen der Reaktivfarbstoffe der folgenden Formeln lagerstabile konzentrierte Farbstoffzubereitungen herstellen :

stellen:

(113) 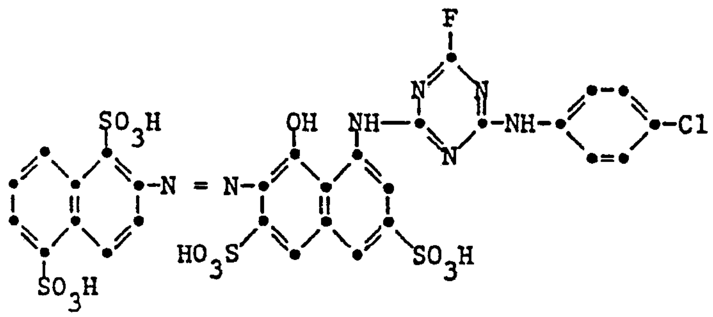

(114) 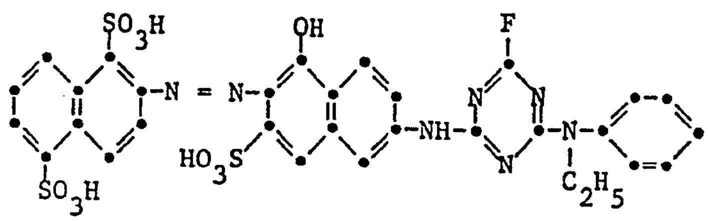

(115) 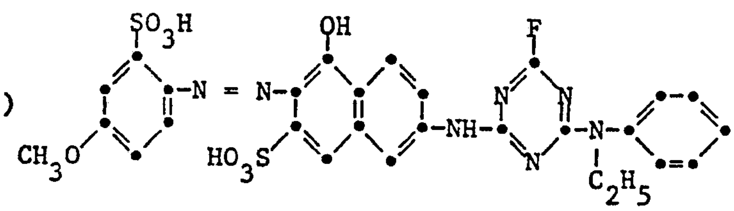

Beispiel 4

3 l einer trüben wässrigen Lösung des Farbstoffes der Formel

(116) 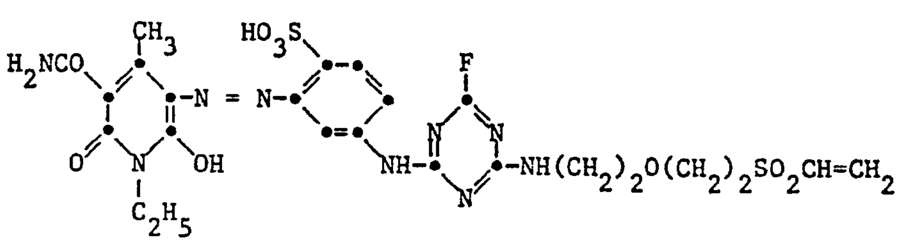

die durch das Umkehrosmoseverfahren gemäss Beispiel 1 erhalten wird und einen Trockensubstanzgehalt von 25 Gew.-% aufweist, wird bei einem Ueberdruck von 0,8 bar über eine Membran aus mit Zirkonoxid beschichtetem porösem Kohlenstoff (cut-off-level ≧ 50'000) mikrofiltriert.

Die Dauer der Mikrofiltration (2 Stunden) wird im Vergleich zu konventionellen stationären Filtrationsmethoden um mehr als 50% verkürzt.

Man erhält 2,8 l eines klaren Filtrats mit einem Farbstoffgehalt von 25 Gew.-% und einem Salzgehalt (Natriumchlorid) von etwa 0,1 Gew.-%.

Aus dieser Lösung wird durch Zugabe von Natriumtripolyphosphat als Puffer in einer Menge bis zu 2,5 Gew.-%, bezogen auf die gesamte Farbstofflösung, eine konzentrierte, lagerstabile Farbstoffzubereitung hergestellt, deren pH-Wert 6,5 bis 8,5 beträgt.

In analoger Weise kann man auch aus Rohfarbstofflösungen, enthaltend Farbstoffe der folgenden Formeln, konzentrierte, lagerstabile Farbstoffzubereitungen herstellen. Die eingesetzte Menge Natriumtripolyphospat kann im Bereich von 1,8 bis 3,6 Gew.-%, bezogen auf die gesamte Zubereitung, schwanken.

(117) 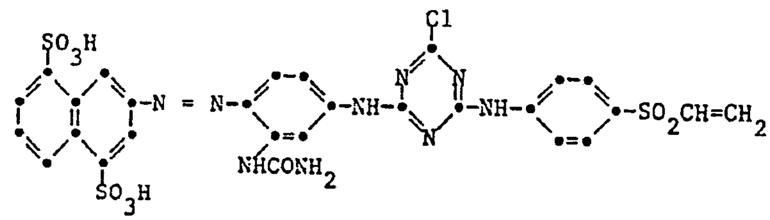

(118) 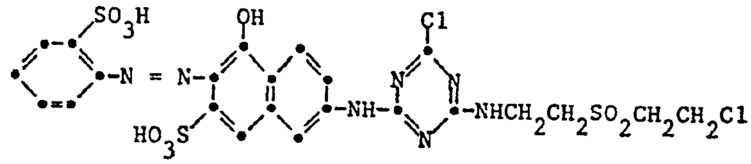

(119) 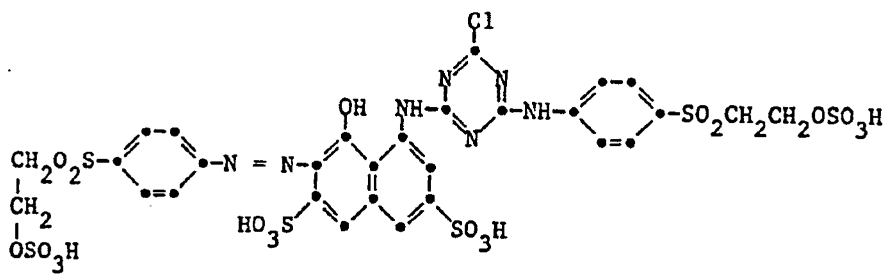

(120)

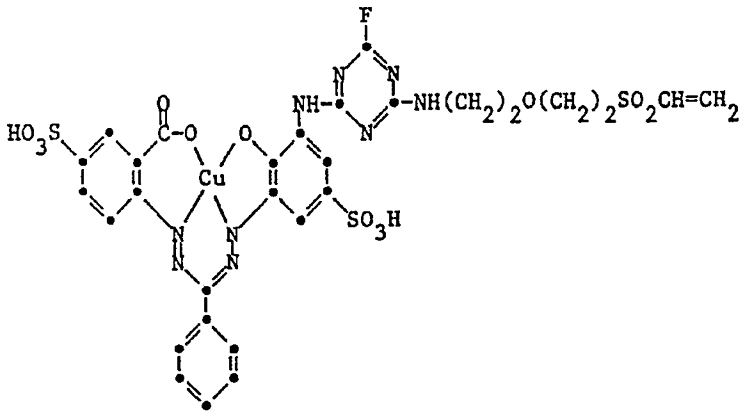

(121)

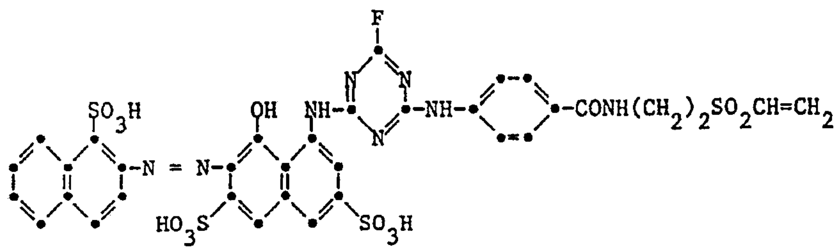

(122)

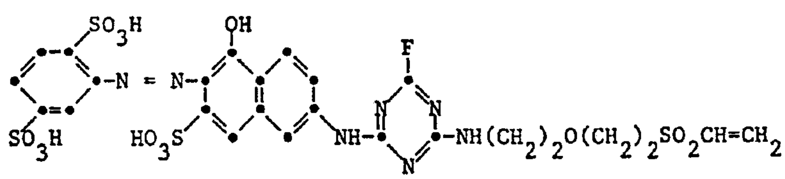

In den folgenden Formeln ist X gleich Fluor oder Chlor. Farbstoffzubereitungen von Farbstoffen, in denen X gleich Fluor ist, werden in der Regel mit Natriumtripolyphosphat oder mit einem Gemisch von Natriumtripolyphosphat und Zitronensäure oder Dihydrogenphosphat und Zitronensäure gepuffert. Der pH-Wert der Zubereitungen liegt im Bereich von etwa 6,5 bis 8,5, vorzugsweise bei etwa 7. Ist X gleich Chlor, so stellt man die entsprechenden Farbstoffzubereitungen auf pH-Werte im Bereich von 5 bis 6,5, vorzugsweise auf eta 6 ein. Geeignete Puffersubstanzen sind z.B. Dinatriumhydrogenphosphat oder Zitronensäure. Als Alternative kann in beiden Fällen ein adäquates Gemisch aus Ethylendiamintetraessigsäure und Natriumtripolyphosphat als Puffer eingesetzt werden.

(123)

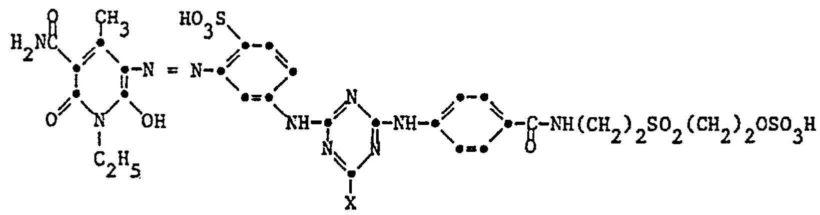

(123a)

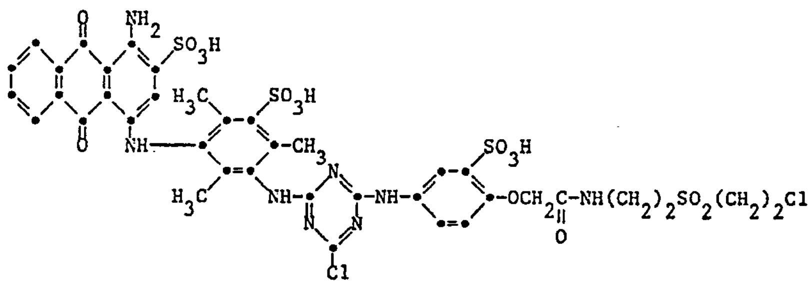

| Beispiel | | X | X | Nuance |
|---|---|---|---|---|
| (124) | 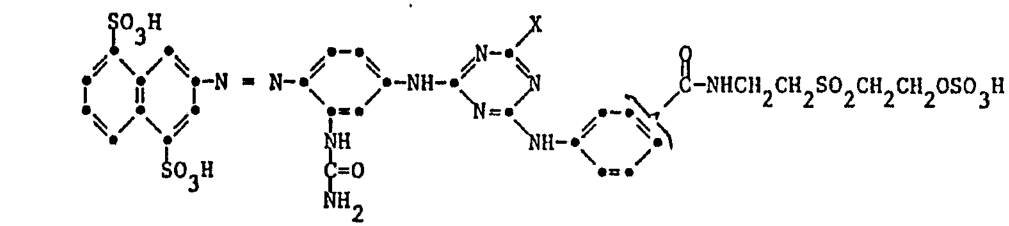 | Cl | F | gold-gelb |
| (125) | 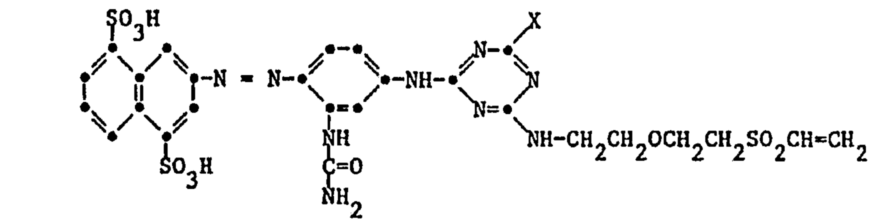 | Cl | F | dito |
| (126) | 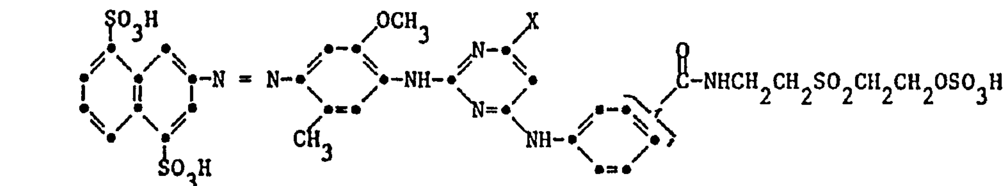 | Cl | F | dito |
| (127) | 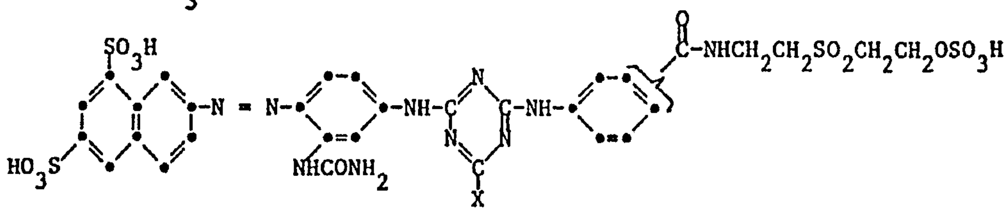 | Cl | F | dito |

| Beispiel | | X | X | Nuance |
|---|---|---|---|---|
| (128) | 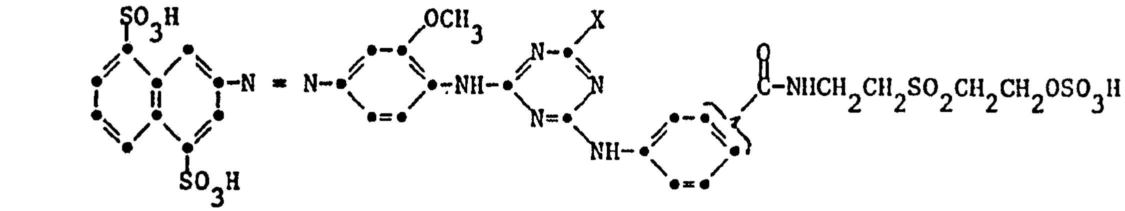 | Cl | F | gold-gelb |
| (129) | 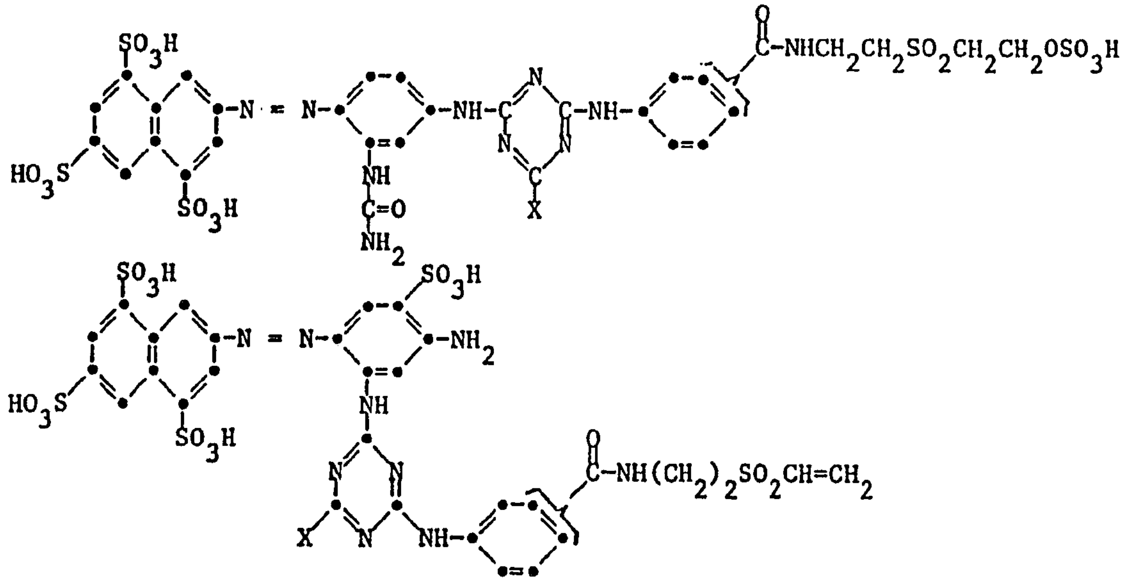 | Cl | F | dito |
| (130) | | Cl | F | dito |

| Beispiel | | X | X | Nuance |
|---|---|---|---|---|
| (131) | 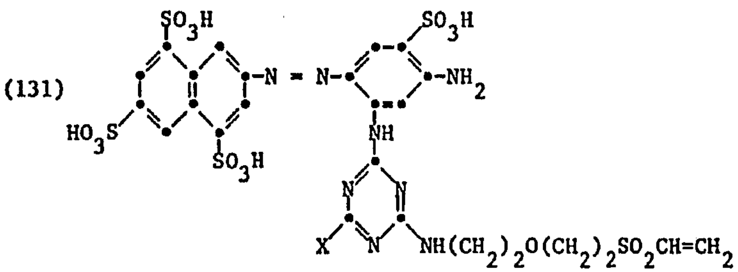 | Cl | F | gold-gelb |
| (132) | 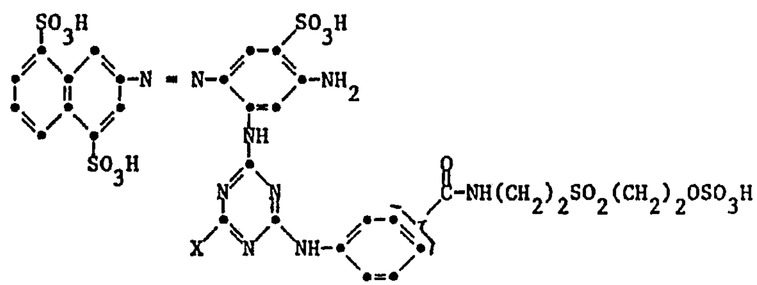 | Cl | F | dito |
| (133) | 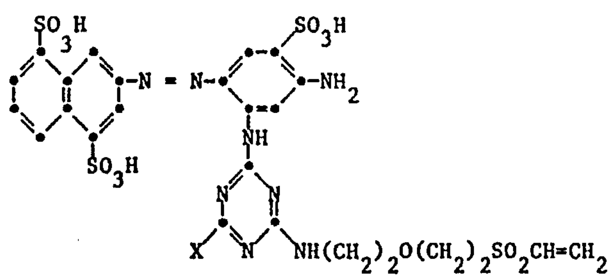 | Cl | F | dito |

| Beispiel | | X | X | Nuance |
|---|---|---|---|---|
| (134) | 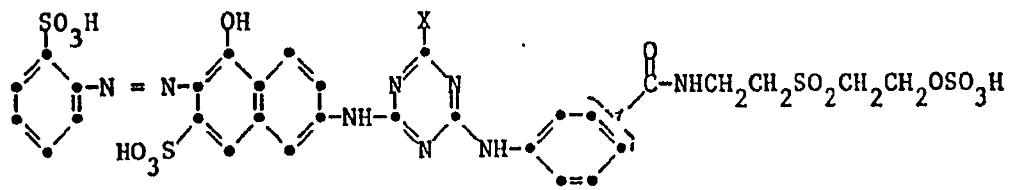 | Cl | F | gelb-stichig orange |
| (135) | 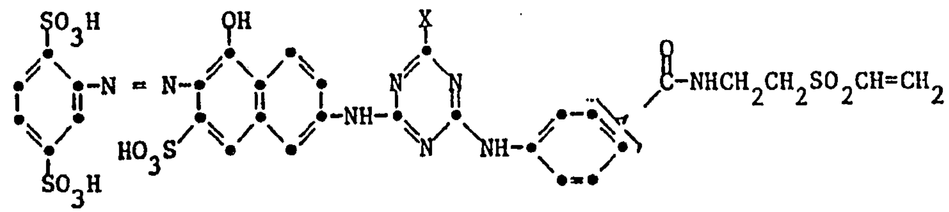 | Cl | F | dito |
| (136) | 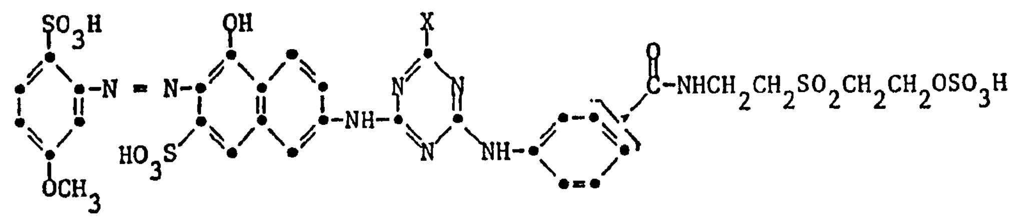 | Cl | F | orange |
| (137) | 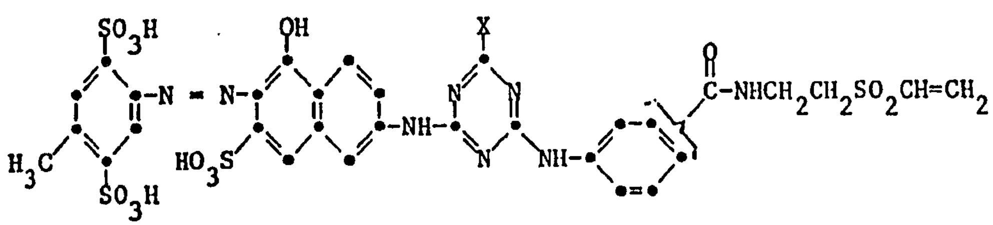 | Cl | F | dito |

| Beispiel | | X | X | Nuance |
|---|---|---|---|---|
| (138) | 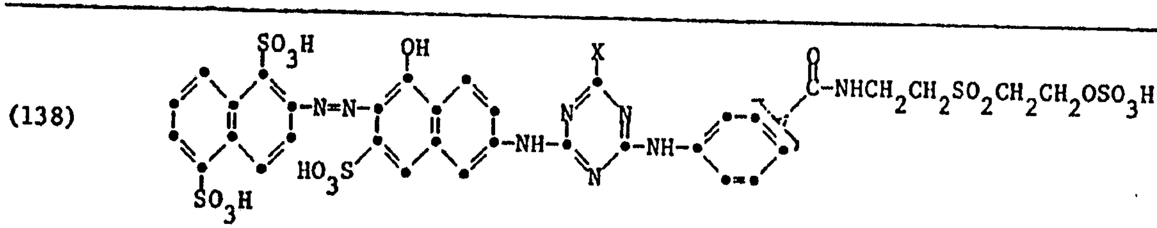 | Cl | F | orange |
| (139) | 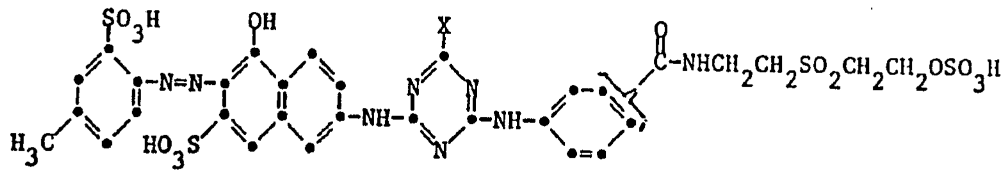 | Cl | F | rot-stichig orange |
| (140) | 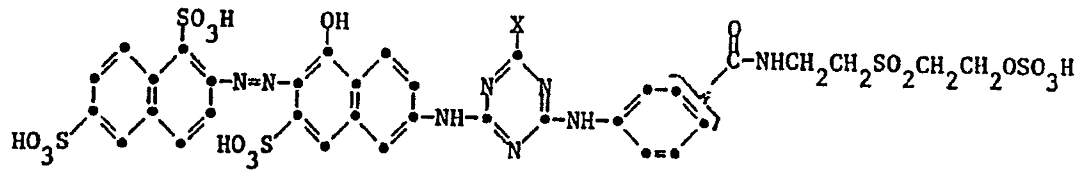 | Cl | F | dito |
| (141) | 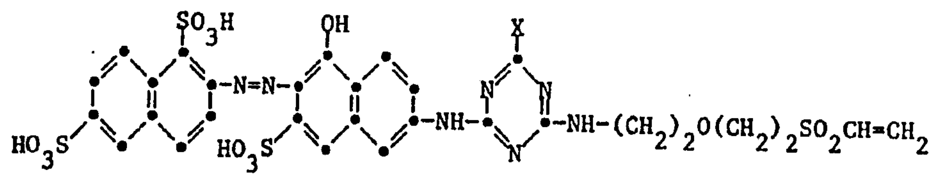 | Cl | F | dito |
| (142) | 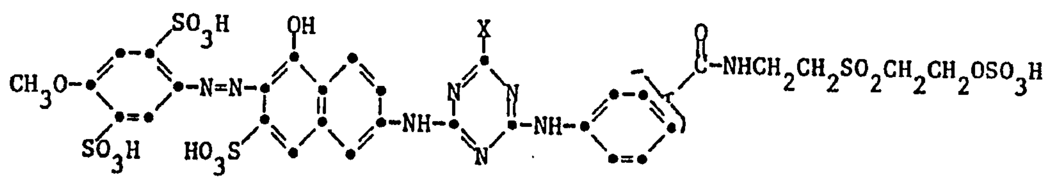 | Cl | F | scharlach |

| Beispiel | | X | X | Nuance |
|---|---|---|---|---|
| (143) | 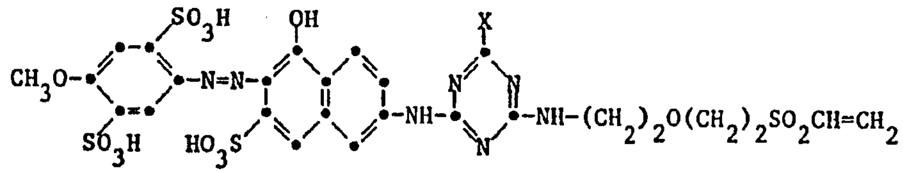 | Cl | F | scharlach |
| (144) | 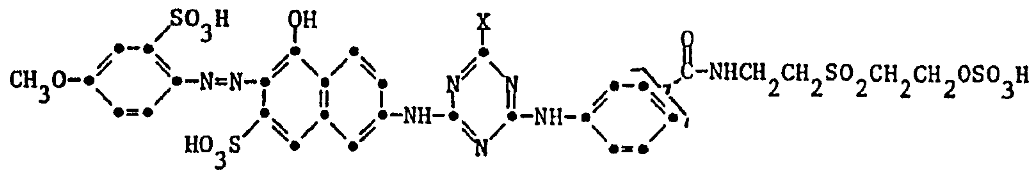 | Cl | F | dito |
| (145) | 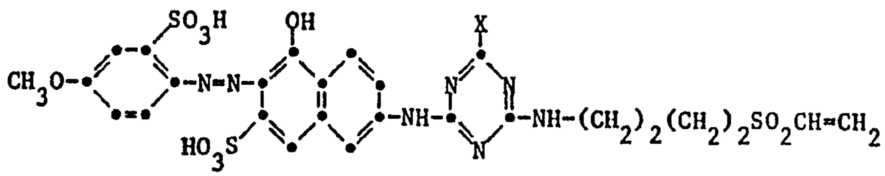 | Cl | F | dito |
| (146) | 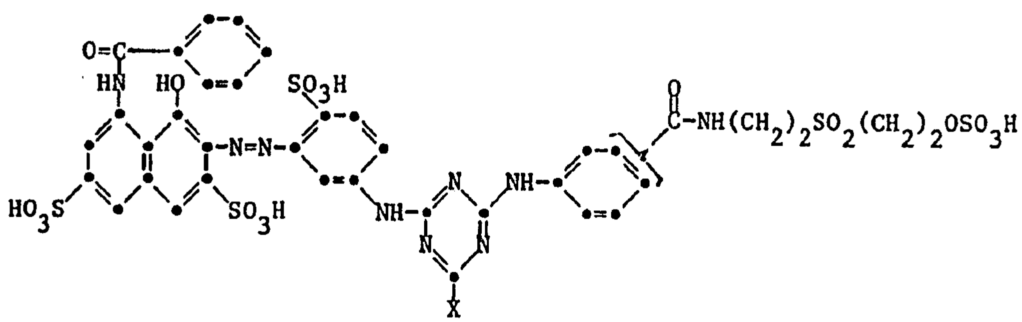 | Cl | F | rot |

| Beispiel | | X | X | Nuance |
|---|---|---|---|---|
| (147) | 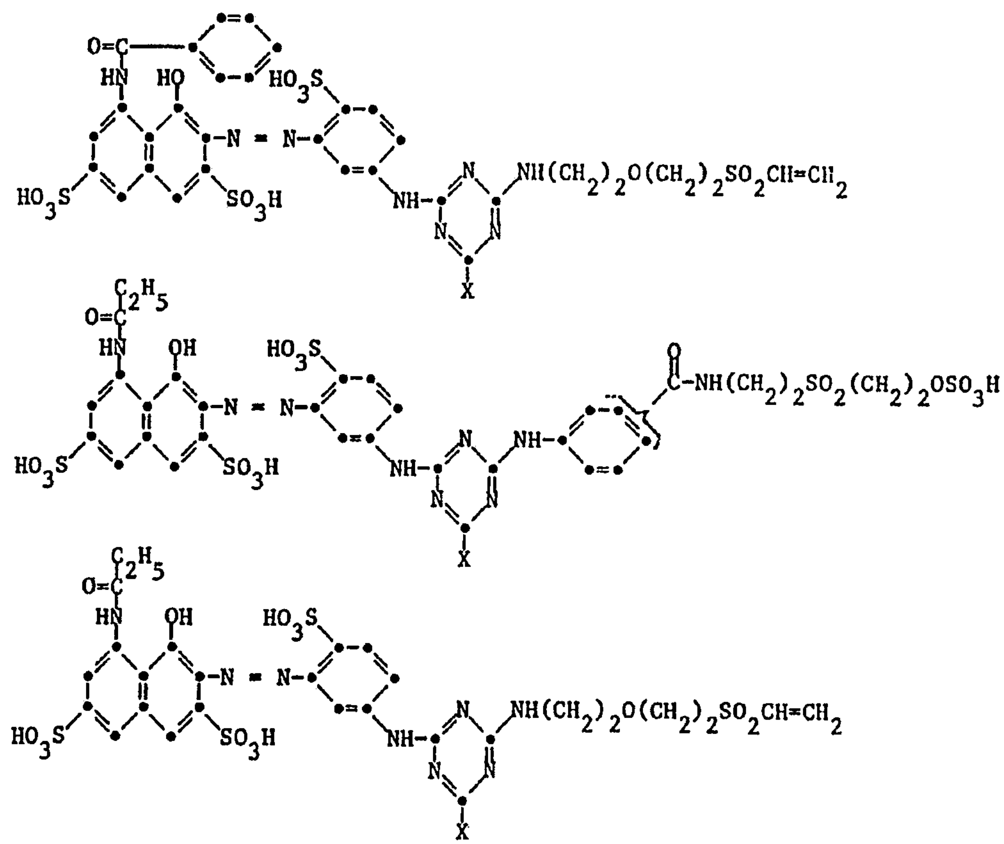 | Cl | F | rot |
| (148) | | Cl | F | scharlach |
| (149) | | Cl | F | dito |

| Beispiel | | X | X | Nuance |
|---|---|---|---|---|
| (150) | 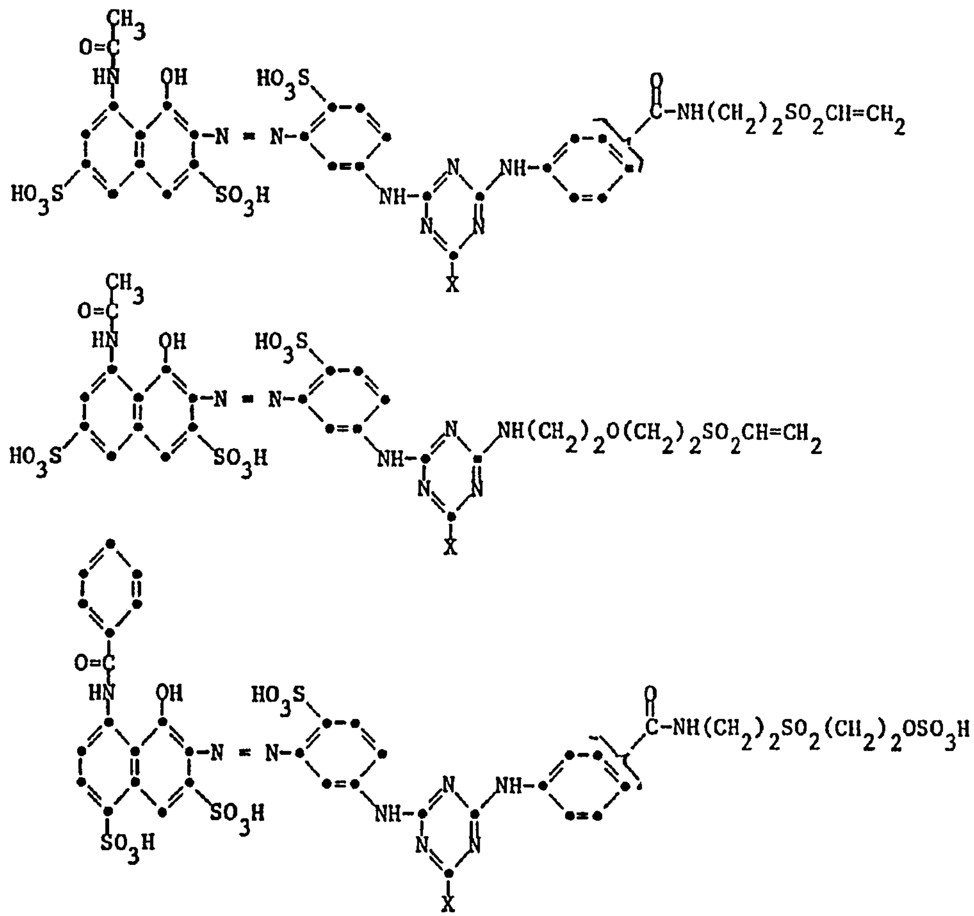 | Cl | F | scharlach |
| (151) | | Cl | F | dito |
| (152) | | Cl | F | dito |

| Beispiel | | X | X | Nuance |
|---|---|---|---|---|
| (153) | 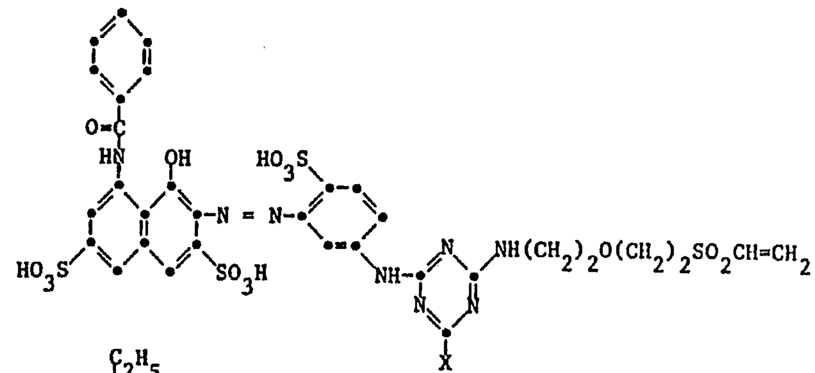 | Cl | F | rot |
| (154) | 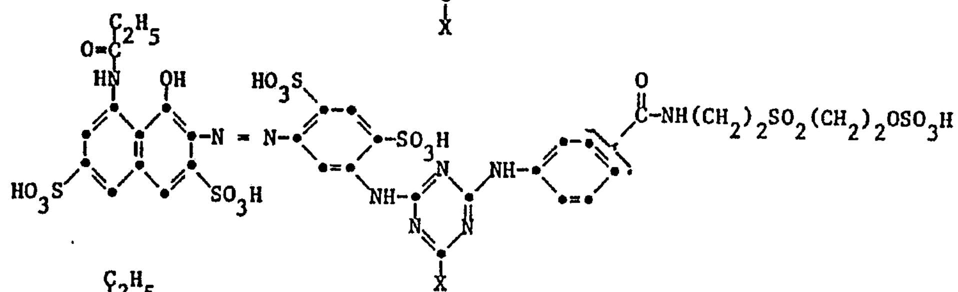 | Cl | F | scharlach |
| (155) | 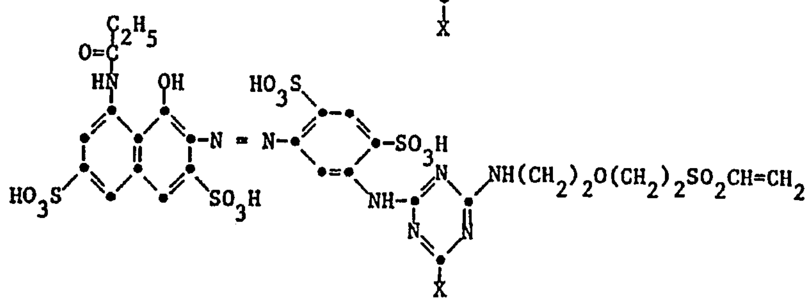 | Cl | F | dito |

| Beispiel | | X | X | Nuance |
|---|---|---|---|---|
| (156) | 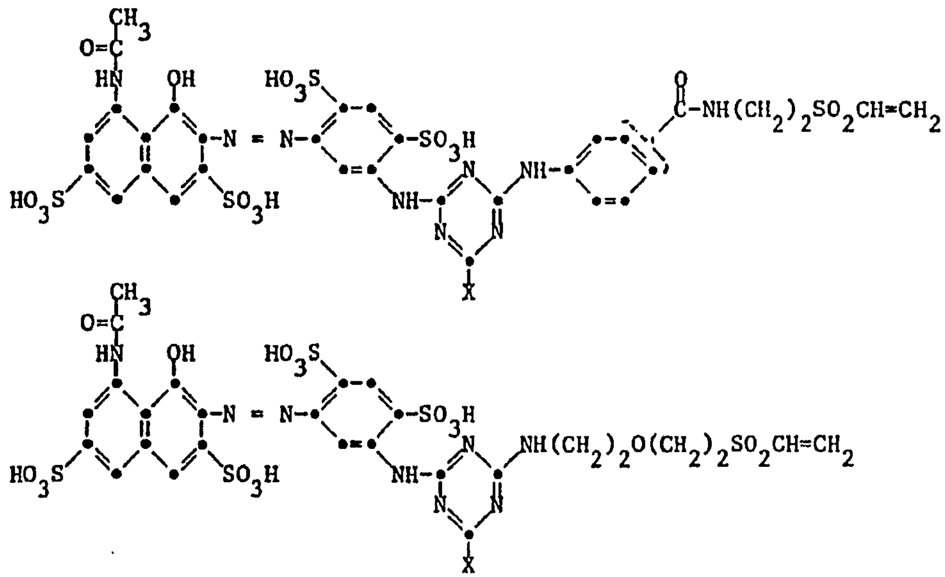 | Cl | F | scharlach |
| (157) | | Cl | F | dito |
| (158) | 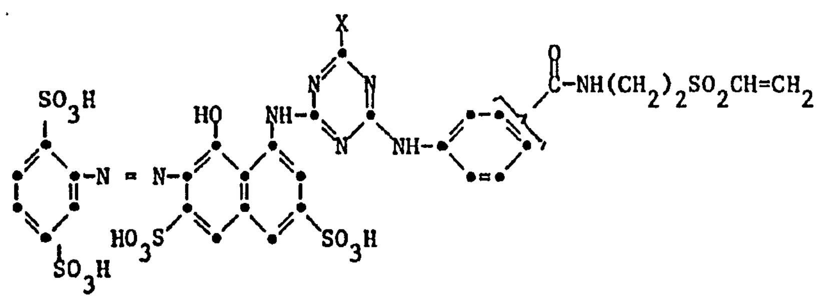 | Cl | F | rot |

| Beispiel | X | X | Nuance |
|---|---|---|---|
| (159) 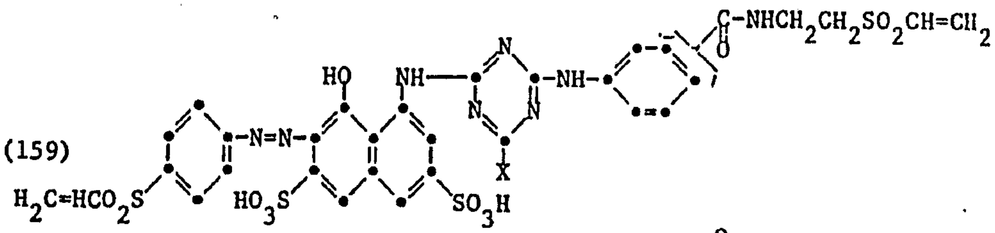 | Cl | F | rot |
| (160) 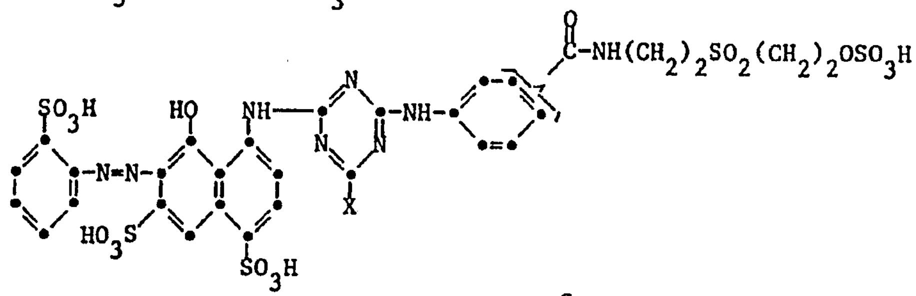 | Cl | F | scharlach |
| (161) 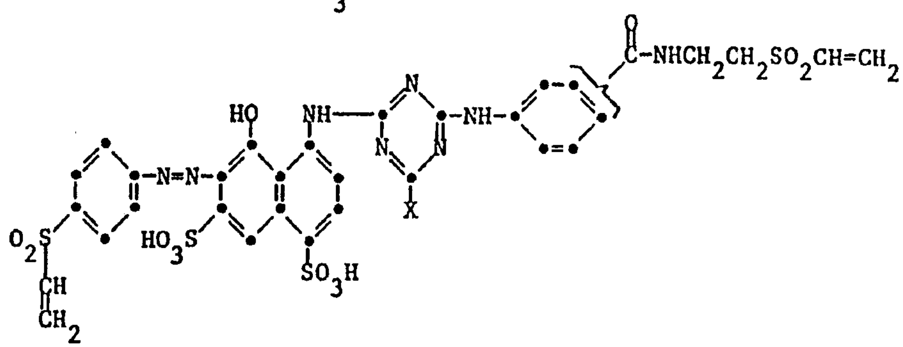 | Cl | F | dito |

| Beispiel | | X | X | Nuance |
|---|---|---|---|---|
| (162) | 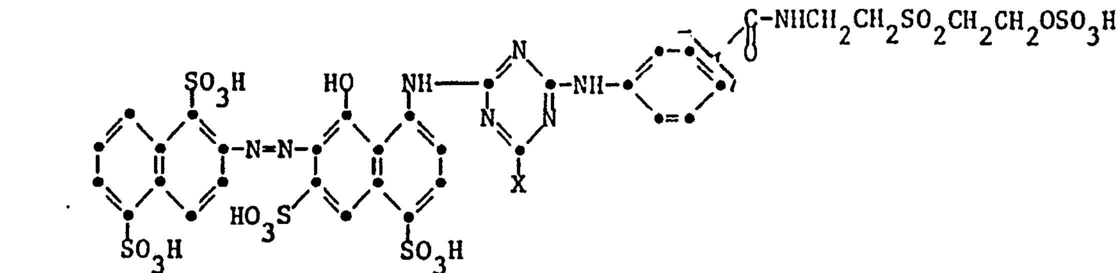 | Cl | F | rot |
| (163) | 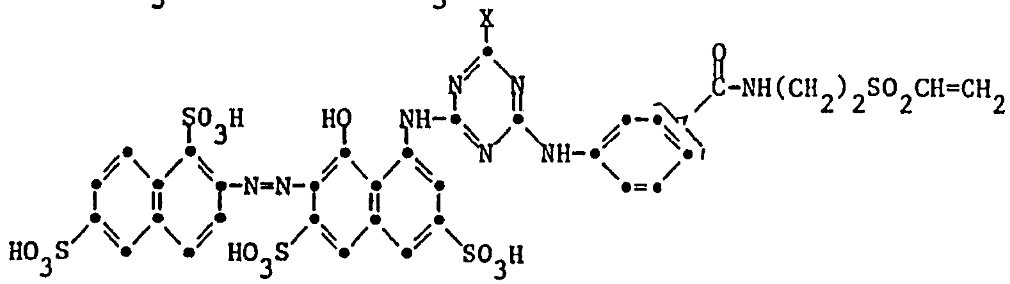 | Cl | F | dito |
| (164) | 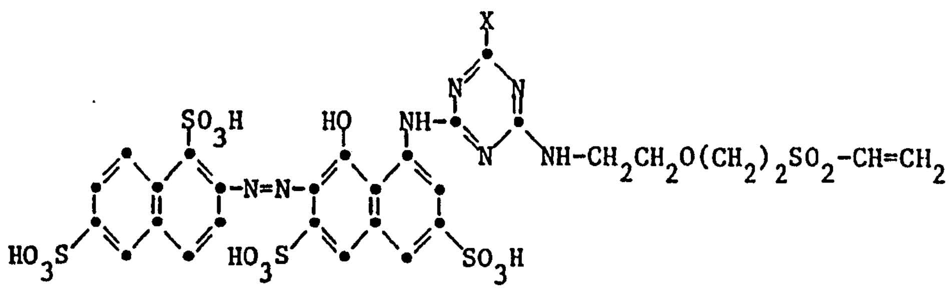 | Cl | F | dito |

| Beispiel | | X | X | Nuance |
|---|---|---|---|---|
| (165) | 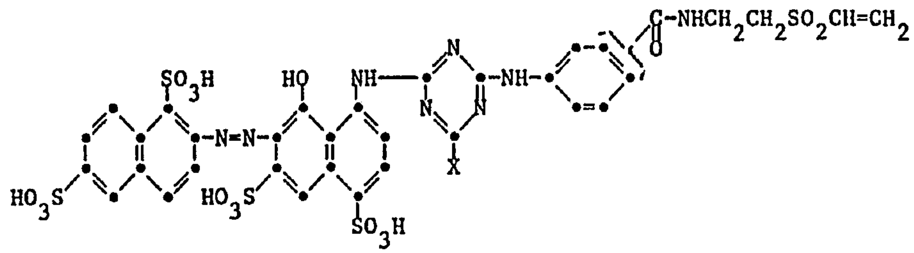 | Cl | F | rot |
| (166) | 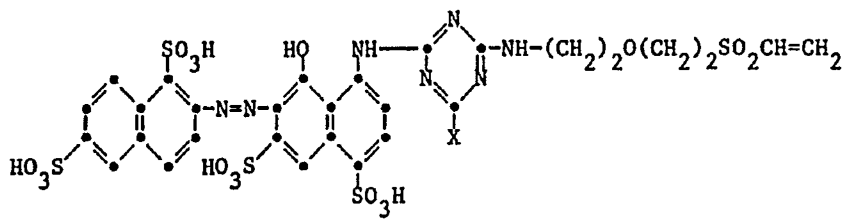 | Cl | F | dito |
| (167) | 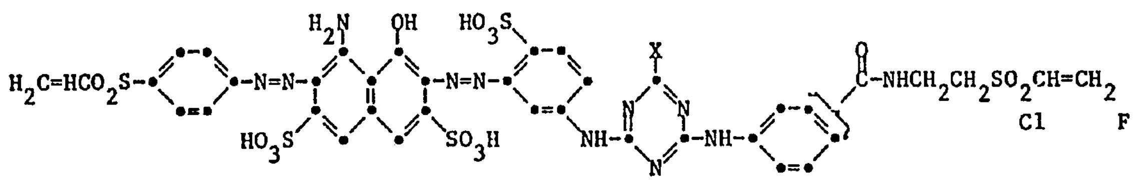 | Cl | F | marine-blau |
| (168) | 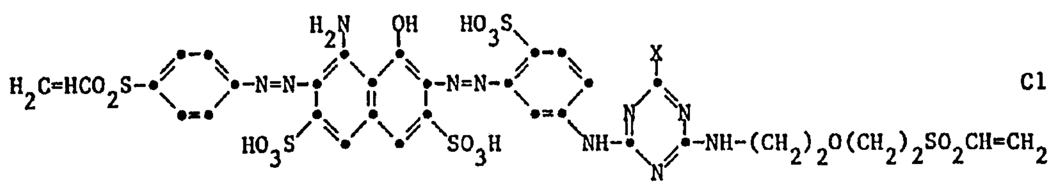 | Cl | F | do |

| Beispiel | X | X | Nuance |
|---|---|---|---|
| (169) 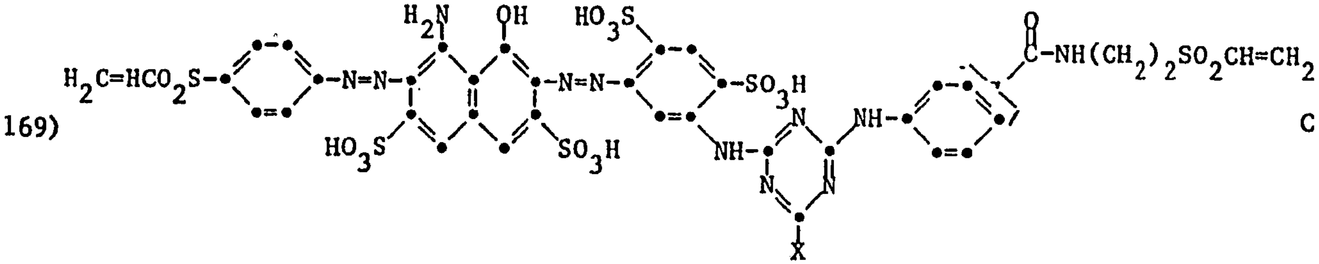 | Cl | F | marine- blau |
| (170) 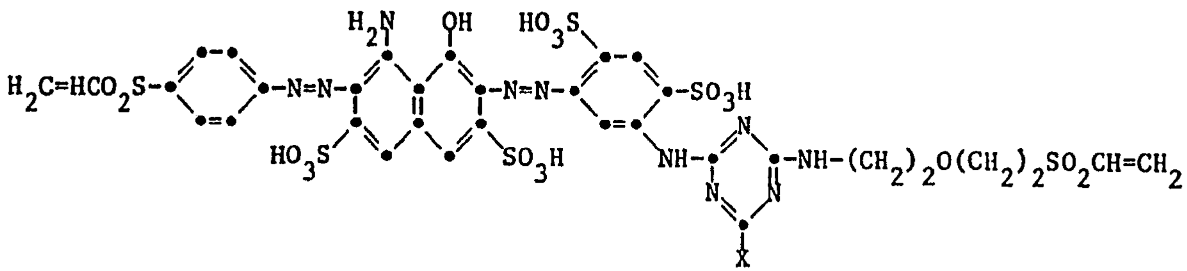 | Cl | F | dito |
| (171) 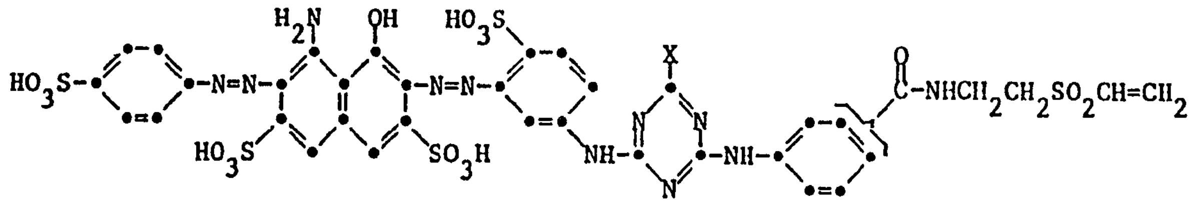 | Cl | F | dito |
| (172) 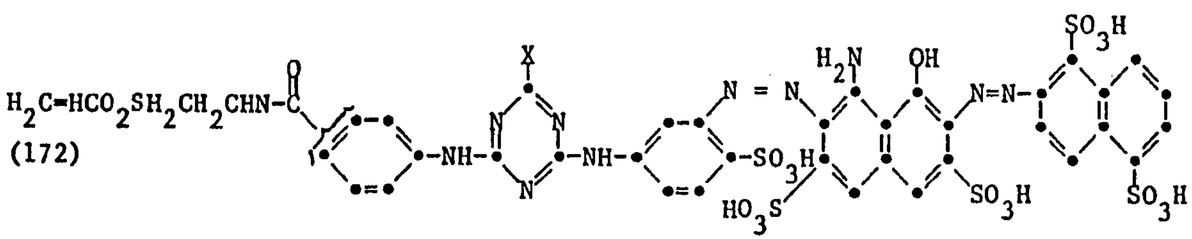 | Cl | F | dito |

| Beispiel | X | X | Nuance |
|---|---|---|---|
| (173) 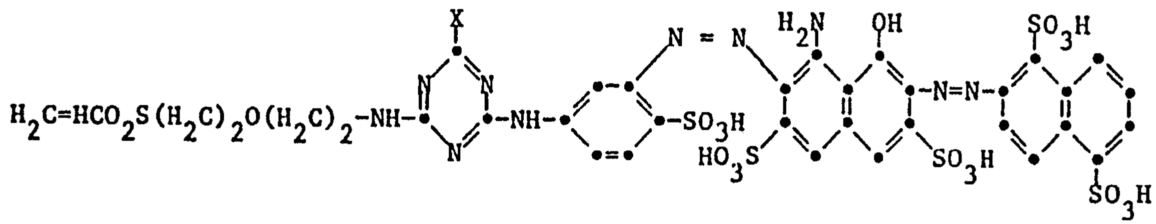 | Cl | F | marine-blau |
| (174) 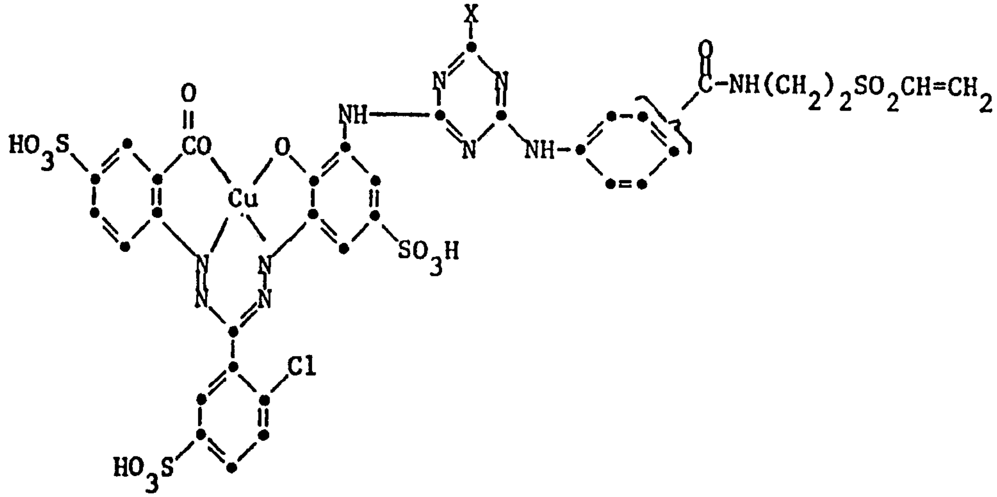 | Cl | F | blau |

| Beispiel | | Farbton |
|---|---|---|
| (175) | 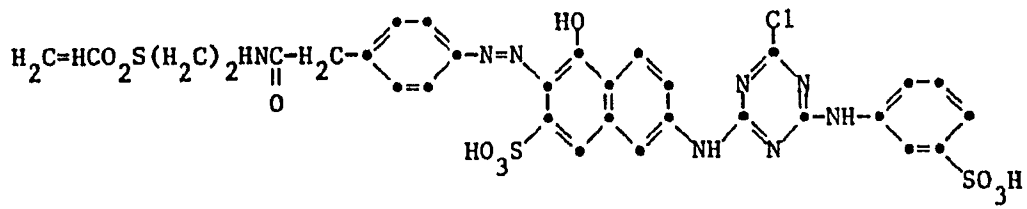 | orange |
| (176) | 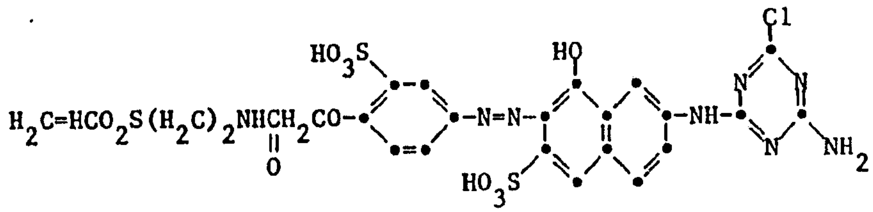 | rot |
| (177) | 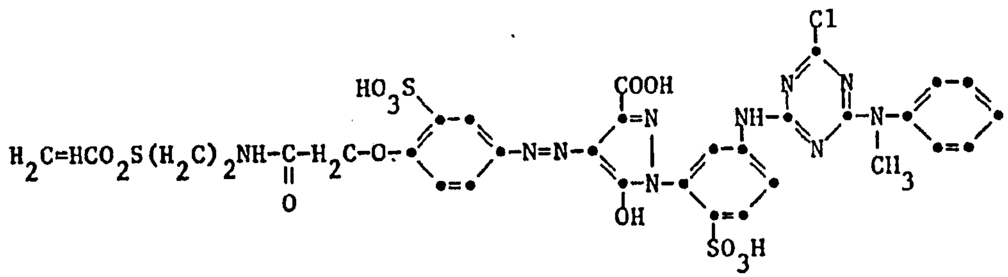 | gold-gelb |
| (178) | 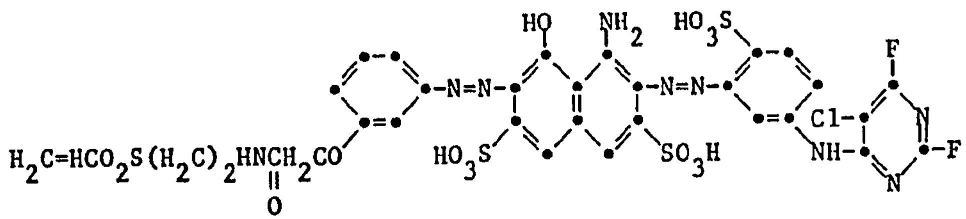 | marine-blau |

| Beispiel | | Farbton |
|---|---|---|
| (179) | 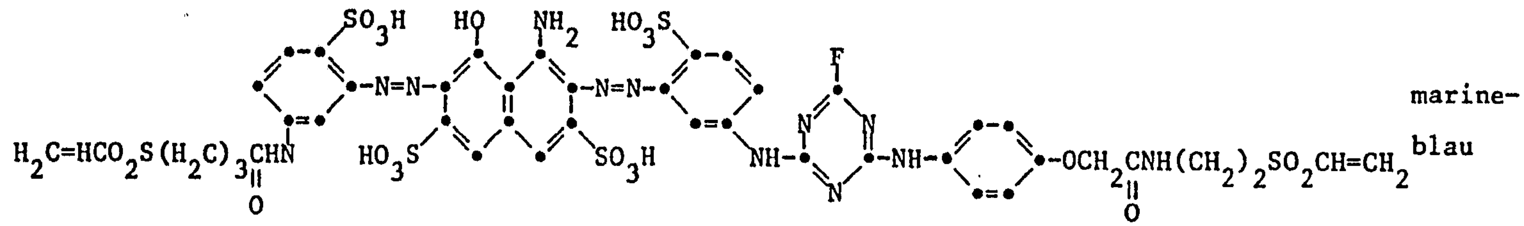 | marine-blau |
| (180) | 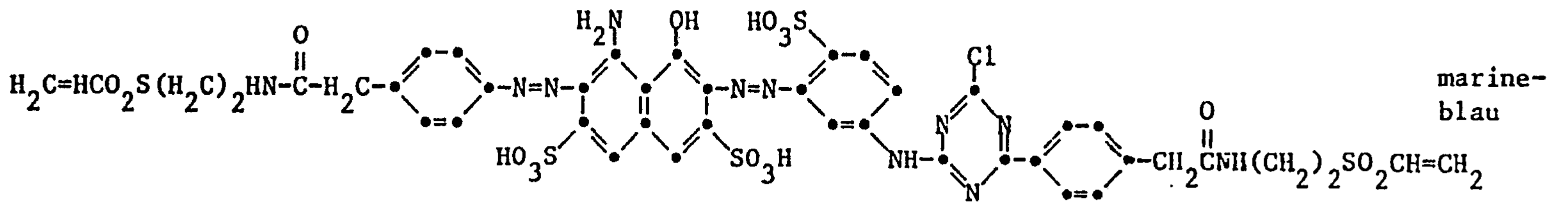 | marine-blau |
| (181) | 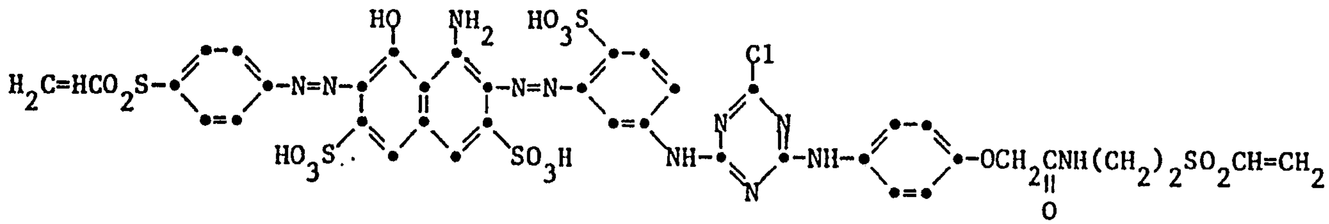 | marine-blau |

Beispiel 5

1 kg Presskuchen des Farbstoffes der Formel

(182) 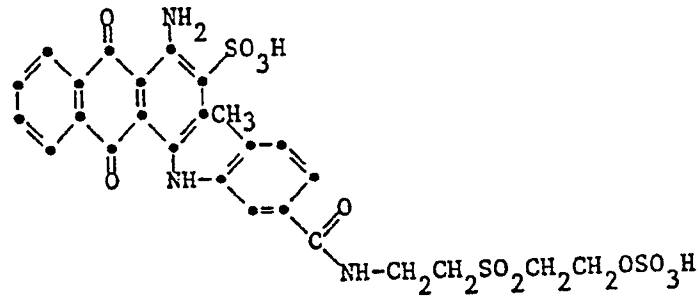

werden in 5,0 l deionisiertem Wasser gelöst. Man erhält eine Lösung mit einem Anteil unlöslicher Feststoffe von etwa 0,3 Gew.-%, die über einen Membranmodul, bestückt mit röhrenförmigen Polypropylenmembranen, mokrofiltriert wird.

Die Mikrofiltration wird bei 40°C durchgeführt ; sie wird im Kreislauf geführt, der Eintrittsdruck beträgt 2 bar, der Austrittsdruck 1,6 bar.

Die Mikrofiltration wird nach 2 Stunden beendet. Man erhält ca. 6 kg einer Farbstofflösung, die frei von ungelösten Anteilen ist.

Das klare Filtrat wird anschliessend durch ein zweistufiges Umkehrosmoseverfahren wie in Beispiel 1 beschrieben entsalzt und aufkonzentriert.

Der Zeitaufwand für dieses Umkehrosmoseverfahren ist um 30% geringer im Vergleich zur Durchführung dieses Verfahrens mit einer nicht mikrofiltrierten Farbstofflösung.

Man erhält ca. 3 kg einer konzentrierten Farbstofflösung mit 20% Trockengehalt, deren Natriumchloridgehalt geringer als 0,2% ist.

Aus dieser Lösung wird durch Zugabe von Anthrachinon-2-sulfonsäure, eines Dispergators, z.B. eines Kondensationsproduktes aus Naphthalinsulfonsäure und Formaldehyd, oder Caprolactam und etwas Puffersubstanz, wie Natriumacetat, eine konzentrierte, lagerstabile Farbstoffzubereitung hergestellt, deren pH-Wert im Bereich von 3,5 bis 4,5 liegt.

In analoger Weise kann man aus folgenden Farbstoffen lagerstabile, konzentrierte Farbstoffzubereitungen herstellen :

(183) 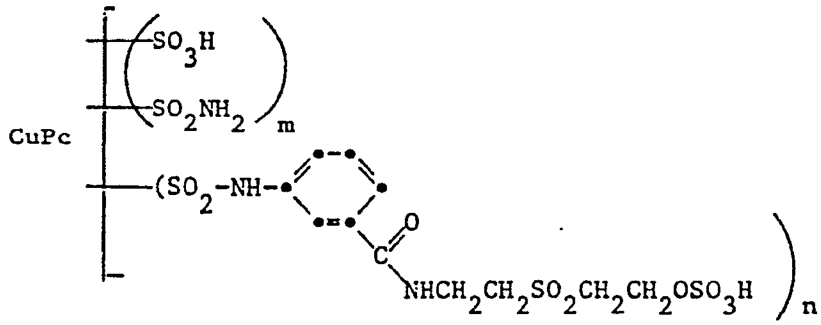

m+n = 4

(184) 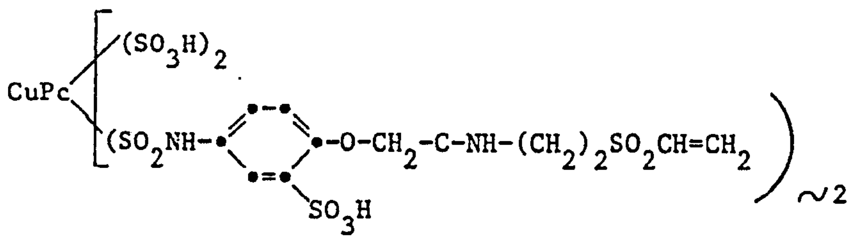

(CuPc = Kupferphthalocyanin)

| Beispiel | | Farbton |
|---|---|---|
| (185) | 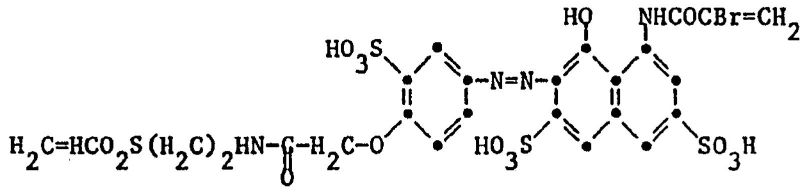 | rot |
| (186) | 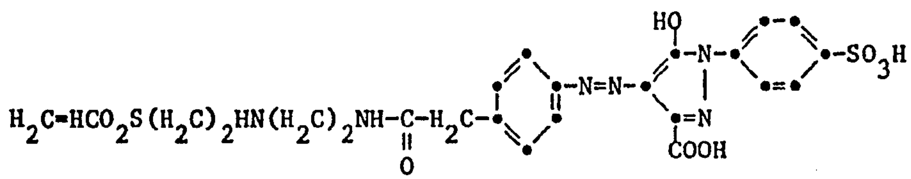 | gold-gelb |
| (187) | 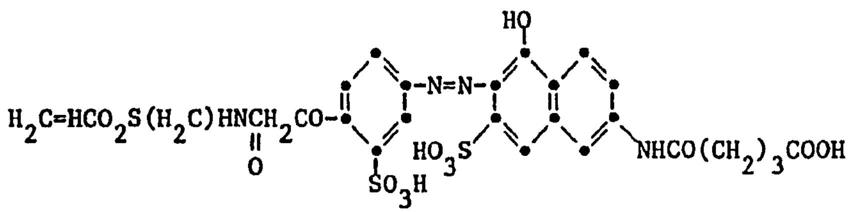 (pH = 4) | scharlach |

Beispiel 6

1500 g Filterpresskuchen des Farbstoffes C.I. Reaktive Red 116 werden in 6000 ml deionisiertem Wasser gelöst. Man erhält eine trübe Farbstofflösung, die bei 45°C über eine röhrenförmige, mit Zirkonoxid beschichtete Aluminiumoxid-Membran, im Kreislauf mikrofiltriert wird (cross-flow microfiltration).

Porengrösse der Membran = 0,05 µm ; Eintrittsdruck = 2,5 bar ; Austrittsdruck = 1,8 bar. Dabei werden etwa 0,8 Gew.-% unlösliche Feststoffe abgetrennt. Die Filtration ist nach 3 Stunden beendet.

Das klar Filtrat wird anschliessend durch ein zweistufiges Umkehrosmoseverfahren wie in Beispiel 1 beschrieben entsalzt und aufkonzentriert. Die für die Umkehrosmose (Entsalzung und Aufkonzentration) benötigte Zeit reduziert sich im Vergleich zum Versuch mit nicht vorfiltrierter Farbstofflösung um 70%. Mittels Vorfiltration wird die Verstopfung der Membranen in der Umkehrosmose verhindert, wodurch sich der Durchfluss (Flux) erhöht, wodurch eine höhere Wirtschaftlichkeit erreicht wird.

Aus dem entsalzten Konzentrat wurde nach der Zugabe von üblichen Hilfsmitteln, wie z.B. von Dispergatoren, Lösungsvermittlern, Bioziden und Entschäumern und anschliessender Klärfiltration wie in Beispiel 4 beschrieben ein im Temperaturbereich von –10 bis 40°C während mindestens 6 Monaten lagerstabiles flüssiges Farbstoffpräparat erhalten.

Ein ebenfalls lagerstabiles flüssiges Farbstoffpräparat erhält man, wenn man von Filterpresskuchen des Farbstoffs C.I. Reactive Orange 68 ausgeht.

Beispiel 7

4500 ml einer trüben wässrigen Lösung des Farbstoffes C.I. Acid Yellow 220 (Trockengehalt = 6,2 Gew.-%) werden wie im Beispiel 1 beschrieben mittels Umkehrosmose entsalzt und aufkonzentriert.

Dem entsalzten Farbstoffkonzentrat werden die üblichen Hilfsmittel, wie z.B. Dispergatoren, Lösungsvermittler, Biozide und/oder Antischaummittel zugegeben, die für ein lagerstabiles flüssiges Präparat benötigt werden.

Die flüssige Formulierung wird im Kreislauf zur Abtrennung unlöslicher bzw. schwerlöslicher Anteil über eine Mikrofiltrationsmembran (Zirkon -oxid auf Kohlenstoffgerüst, Durchlässigkeit (cut-off level) ca. 50.000) cross-flow mikrofiltriert (Eintrittsdruck = 1,8 kg/cm²). Die Dauer der Filtration wird im Vergleich zu konventionellen stationären Filtrationsmethoden um mehr als 50% verkürzt (höhere Wirkschaftlichkeit). Das Filtrat ist frei von Feststoffen und über 6 Monate im Temperaturbereich von –10 bis 50 °C lagerstabil. Als handelsfähiges Farbstoffpräparat kann es direkt zur Herstellung von Färbebädern oder Druckpasten eingesetzt werden.

Mit dem Farbstoff C.I. Acid Blue 317 erhält man bei analoger Arbeitsweise ebenfalls ein stabiles Farbstoffpräparat.

Beispiel 8

5000 g der Syntheselösung des Farbstoffes C.I. Acid Yellow 246 (Trockengehalt 7,5%) werden im Kreislauf bei 60°C über ein Membranmodul bestückt mit mit Aluminiumoxid beschichteten Keramikmembranen (Durchmesser 4 mm) mit einem Durchmesser von 4 mm und einer Gesamtfläche von 0,2 m² cross-flow mikrofiltriert. Der Eintrittsdruck beträgt 7,4 bar und der Austrittsdruck 5,9 bar. Dabei werden 0,2 Gew.-% von feinen Feststoffpartikeln abgetrennt.

Das klare Filtrat wird anschliessend in einem weiteren Schritt bei 50°C mittels Umkehrosmose wie in Beispiel 1 beschrieben entsalzt und aufkonzentriert. Ohne die hier beschriebene Vorfiltration der Farbstofflösung mittels "cross-flow microfiltration" wäre die Entsalzung/Aufkonzentration mittels Umkehrosmose nicht möglich gewesen, weil die in der Farbstofflösung enthaltenen Feststoffpartikel die Umkehrosmosmembran verstopft und den Flux auf ein unwirtschaftliches Mass reduziert hätten. Diese Partikel lassen sich erfahrungsgemäss nicht durch konventionelle Filtrationsmethoden abtrennen, da die Filteranlage durch die feinen Feststoffpartikel verstopft wird.

Das entsalzte Konzentrat wird mit den üblichen Hilfsmitteln, wie Lösungsvermittlern, Dispergatoren, Entschäumern, Lösungsmitteln und/oder Bioziden versetzt und anschliessend klärfiltriert. Das erhaltene Farbstoffpräparat ist während mindestens 12 Monaten im Temperaturbereich von –10 bis 40°C stabil.

Unter Verwendung von Syntheselösungen der Farbstoff C.I. Acid Blue 277 und 340 oder Lösungen, die Gemische dieser Farbstoffe enthalten, kann man bei analoger Arbeitsweise ebenfalls Farbstoffpräparate von ausgezeichneter Stabilität erhalten.

Beispiel 9

8000 g Syntheselösung des Farbstoffes C.I. Direct Blue 290 (Trockengehalt = 8,3%) werden bei pH = 6,5 bis 7,5 und 20°C auf einer Umkehrosmose-Anlage wie in Beispiel 1 beschrieben entsalzt und aufkonzentriert. Es wird ein Konzentrat mit 22,5% Trockengehalt erhalten, dessen Natriumchloridgehalt kleiner als 0,3% ist. Nach Einstellung der so erhaltenen Farbstofflösung durch Zugabe von Wasser auf einen Trockengehalt von 20%, wird die Farbstofflösung zwecks Abtrennung von schwer- bzw. unlöslichen Anteilen im Kreislauf bei 25°C über eine "cross-flow microfiltration" Anlage (Gesamtfläche = 0,05 $m^2$), die mit Polypropylenmembranen bestückt ist, filtriert. Dabei werden 0,12 Gew.-% Feststoffe abgetrennt. Das so erhaltene Farbstoffpräparat ist im Temperaturbereich von –10 bis+40°C während mindestens 6 Monaten lagerstabil.

Farbstoffpräparate mit ebenfalls ausgezeichneter Stabilität erhält man, wenn man Syntheselösungen der folgenden Farbstoffe in analoger Weise behandelt : C.I. Direct Blue 15, C.I. Direct Blue 80, C.I. Direct Red 81, C.I. Direct Red 239, C.I. Direct Orange 29 : 1 und C.I. Direct Yellow 84.

## Ansprüche

1. Verfahren zur Herstellung von konzentrierten, wässrigen Farbstoffzubereitungen wasserlöslicher organischer Farbstoffe durch Entsalzung und Aufkonzentrierung entsprechender Rohfarbstofflösungen mittels eines Membrantrennverfahrens, dadurch gekennzeichnet, dass man vor und/oder nach dem Membrantrennverfahren die Farbstofflösungen zwecks Abtrennung unlöslicher Bestandteile einer Querstrom-Mikrofiltration unterwirft und in eine flüssige oder feste Handelsform überführt.

2. Verfahren nach Anspruch 1, dadurch gekennzeichnet, dass die Membrantrennverfahren die Dialyse oder die Elektrodialyse und insbesondere die Ultrafiltration oder die Umkehrosmose sind.

3. Verfahren nach Anspruch 2, dadurch gekennzeichnet, dass man die Membrantrennverfahren mit semipermeablen Membranen durchführt, die einen Porendurchmesser von 0,1 bis 50 nm und einen Trennschnitt im Molekulargewichtsbereich von 300 bis 1000, vorzugsweise von 400 bis 800 aufweisen.

4. Verfahren nach Anspruch 1, dadurch gekennzeichnet, dass man die Querstrom-Mikrofiltration mit mikroporösen Membranen durchführt, deren Poren einen Durchmesser von 0,05 bis 40 µm, vorzugsweise 0,1 bis 40 µm und insbesondere 0,2 bis 10 µm aufweisen.

5. Verfahren nach Anspruch 4, dadurch gekennzeichnet, dass man die Mikrofiltration mit Membranen aus porösem Glas, Keramik, Stahl, beschichtetem porösem Kohlenstoff, Aluminiumoxid oder organischen Polymeren durchführt.

6. Verfahren nach Anspruch 5, dadurch gekennzeichnet, dass die organischen membranbildenden Polymere gegebenenfalls chemisch oder physikalisch modifizierte Polyethylene, Polypropylene, Polytetrafluorethylene, Celluloseacetate, Polyacrylnitrile, Polyvinylalkohole, Polystyrole, Polysulfone, Polyimide oder Polyamide sind.

7. Verfahren nach einem der Ansprüche 1 bis 5, dadurch gekennzeichnet, dass man Farbstofflösungen von wasserlöslichen anionischen oder kationischen Farbstoffen, insbesondere von anionischen Reaktivfarbstoffen der Querstrom- Mikrofiltration unterwirft.

8. Verfahren nach Anspruch 7, dadurch gekennzeichnet, dass die Farbstofflösungen Temperaturen im Bereich von 10 bis 80°C, vorzugsweise von 20 bis 60°C und pH-Werte im Bereich von 3 bis 10, vorzugsweise 3 bis 9, aufweisen.

9. Verfahren nach Anspruch 7 dadurch gekennzeichnet, dass man die Mikrofiltration bei einem Druck von 0,5 bis 10 bar, vorzugsweise 0,5 bis 5 bar durchführt.

10. Verfahren nach einem der Ansprüche 1 bis 9, dadurch gekennzeichnet, dass man die Farbstofflösungen vor und nach dem Membrantrennverfahren einer Mikrofiltration unterwirft.

11. Die nach den Verfahren eines der Ansprüche 1 bis 10 erhaltenen flüssigen oder festen Farbstoffzubereitungen.

12. Verwendung der Farbstoffzubereitungen nach Anspruch 11 zum Färben und Bedrucken von natürlichen oder synthetischen Fasermaterialien, insbesondere von textilen Fasermaterialien, sowie von Papier oder Leder.

## Claims

1. A process for the preparation of a concentrated aqueous dye formulation of a water-soluble organic dye by desalination and concentration of a corresponding crude dye solution by means of a membrane separation

process, which comprises subjecting the dye solution to cross-flow microfiltration before and/or after the membrane separation process for the purpose of removing insoluble constituents and converting it into a liquid or solid commercial form.

2. A process according to claim 1, wherein the membrane separation process is dialysis or electrodialysis and, in particular, ultrafiltration or reverse osmosis

3. A process according to claim 2, wherein the membrane separation process is carried out with a semipermeable membrane which has a pore diameter of 0.1 to 50 nm and a cut-off level in the molecular weight range from 300 to 1,000, preferably from 400 to 800.

4. A process according to claim 1, wherein the cross-flow microfiltration is carried out with a microporous membrane, the pores of which have a diameter of 0.05 to 40 μm, preferably 0.1 to 40 μm and in particular 0.2 to 10 μm.

5. A process according to claim 4, wherein the microfiltration is carried out with a membrane of porous glass, ceramic, steel, coated porous carbon, aluminium oxide or an organic polymer.

6. A process according to claim 5, wherein the organic membrane-forming polymer is a polyethylene, polypropylene, polytetrafluoroethylene, cellulose acetate, polyacrylonitrile, polyvinyl alcohol, polystyrene, polysulfone, polyimide or polyamide, which may be modified chemically or physically.

7. A process according to any one of claims 1 to 6, wherein a dye solution of a water-soluble anionic or cationic dye, in particular an anionic reactive dye, is subjected to the cross-flow microfiltration.

8. A process according to claim 7, wherein the dye solution has a temperature in the range from 10 to 80°C, preferably from 20 to 60°C, and a pH in the range from 3 to 10, preferably 3 to 9.

9. A process according to claim 7, wherein the microfiltration is carried out under a pressure of 0.5 to 10 bar, preferably 0.5 to 5 bar.

10. A process according to any one of claims 1 to 9, wherein the dye solution is subjected to microfiltration before and after the membrane separation process.

11. The liquid or solid dye formulation obtained by the process of any one of claims 1 to 10.

12. The use of a dye formulation according to claim 11 for dyeing and printing natural or synthetic fibre materials, in particular textile fibre materials, and paper or leather.

## Revendications

1. Procédé de production de préparations de colorant concentrées, aqueuses de colorants organiques hydrosolubles par dessalement et concentration de solutions correspondantes de colorant brut au moyen d'un procédé de séparation par membrane, caractérisé en ce qu'on soumet les solutions de colorant, avant et/ou après le procédé de séparation par membrane, à une microfiltration à courant transversal, en vue de séparer les composants insolubles, et qu'on les convertit en une forme commerciale liquide ou solide.

2. Procédé selon la revendication 1, caractérisé en ce que les procédés de séparation par membrane sont la dialyse ou l'électrodialyse, et en particulier l'ultrafiltration ou l'osmose inverse.

3. Procédé selon la revendication 2, caractérisé en ce que l'on effectue le procédé de séparation par membrane avec des membranes semi-perméables qui présentent des pores de diamètre compris entre 0,1 et 50 nm et une limite d'exclusion située dans le domaine de masses moléculaires compris entre 300 et 1000, de préférence entre 400 et 800.

4. Procédé selon la revendication 1, caractérisé en ce que l'on effectue la microfiltration à courant transversal avec des membranes microporeuses, dont les pores présentent un diamètre de 0,05 à 40 μm, de préférence de 0,1 à 40 μm et en particulier de 0,2 à 10 μm.

5. Procédé selon la revendication 4, caractérisé en ce que l'on effectue la microfiltration avec des membranes en verre poreux, céramique, acier poreux, carbone poreux recouvert, alumine ou polymères organiques.

6. Procédé selon la revendication 5, caractérisé en ce que les polymères organiques constituant la membrane sont des polyéthylènes, des polypropylènes, des poly(tétrafluoroéthylène), des acétates de cellulose, des polyacrylonitriles, des poly(alcool vinylique), des polystyrènes, des polysulfones, des polyimides ou des polyamides, éventuellement modifiés chimiquement ou physiquement.

7. Procédé selon l'une quelconque des revendications 1 à 6, caractérisé en ce que l'on soumet à la microfiltration à courant transversal des solutions de colorant de colorants anioniques ou cationiques solubles dans l'eau, en particulier de colorants réactifs anioniques.

8. Prooédé selon la revendication 7, caractérisé en ce que les solutions de colorant présentent des températures comprises entre 10 et 80°C, de préférence entre 20 et 60°C, et un pH compris entre 3 et 10, de préférence entre 3 et 9.

9. Procédé selon la revendication 7, caractérisé en ce que l'on effectue la microfiltration sous une pression

de 0,5 à 10 bar, de préférence de 0,5 à 5 bar.

10. Procédé selon l'une quelconque des revendications 1 à 9, caractérisé en ce que l'on soumet les solutions de colorant à une microfiltration avant et après le procédé de séparation par membrane.

11. Les préparations liquides ou solides de colorant obtenues selon les procédés de l'une quelconque des revendications 1 à 10.

12. Utilisation des préparations de colorant selon la revendication 11 pour la teinture et l'impression de matières en fibres naturelles ou synthétiques, en particulier de matières en fibres textiles, ainsi que du papier ou du cuir.